# EUROPÄISCHE PATENTSCHRIFT

(11) **EP 3 601 655 B1**
(45) Veröffentlichungstag und Bekanntmachung des Hinweises auf die Patenterteilung: **05.01.2022**
(21) Anmeldenummer: 18713940.7
(22) Anmeldetag: 28.03.2018
(51) Int. Cl.: D04H 3/147, D04H 3/018, D04H 3/007, D01D 5/30, B01D 39/16, D01F 8/06

(54) **SPINNVLIESMATERIAL, GEGENSTAND UMFASSEND EIN SPINNVLIESMATERIAL, FILTERELEMENT UND DEREN VERWENDUNG**
SPUN-BONDED FABRIC MATERIAL, OBJECT COMPRISING A SPUN-BONDED FABRIC MATERIAL, FILTER ELEMENT, AND USE THEREOF
MATÉRIAU NON-TISSÉ VOIE FONDUE, OBJET COMPRENANT UN MATÉRIAU NON-TISSÉ VOIE FONDUE, ÉLÉMENT FILTRANT ET LEUR UTILISATION

(30) Priorität: 28.03.2017 DE 102017002957; 28.03.2017 EP 17163369
(43) Veröffentlichungstag der Anmeldung: 05.02.2020
(73) Patentinhaber: MANN+HUMMEL GmbH, 71636 Ludwigsburg (DE)
(72) Erfinder: ORENDT, Stefan, 95512 Neudrossenfeld (DE); PEMSEL, Thomas, 71638 Ludwigsburg (DE)
(74) Vertreter: Mann + Hummel Intellectual Property
(86) Internationale Anmeldenummer: PCT/EP2018/057979
(87) Internationale Veröffentlichungsnummer: WO 2018/178180

(56) Entgegenhaltungen:
- WO-A1-2016/016848
- US-A- 5 970 583
- US-A1- 2003 203 695
- US-A1- 2010 159 770

## Beschreibung

### Technisches Gebiet

Die vorliegende Erfindung betrifft ein Spinnvliesmaterial, einen Gegenstand mit dem Spinnvliesmaterial, insbesondere ein Filtermedium, ein Filterelement und deren Verwendungen.

Beim Filtern von fluiden Medien, wie beispielsweise von Luft für den Innenraum eines Fahrzeugs oder Gebäudes, werden Filtermedien eingesetzt. Bekannte Filtermedien sind z. B. Papiere, Schäume, Gewebe und Vliesstoffe, die auch als Non-woven Materialien bezeichnet werden. Die vorliegende Erfindung betrifft Vliesstoffe und Kombinationen mit Vliesstoffen als Filtermedien.

Obwohl Filtermedien für verschiedene Anwendungsbereiche denkbar sind, wird vorliegend insbesondere auf die Problematik zur Filterung im Bereich HVAC (Heating, Ventilation and Air Conditioning) und von Zuluft für den Innenraum eines Kraftfahrzeugs eingegangen. Die beschriebenen Filterelemente und Filtermedien können aber ggf. auch in anderen Anwendungen, z. B. als Filter für Brennstoffzellen, für Ventilatoren oder für Schaltschränke oder als Ansaugfilter für Motoren oder Kompressoren dienen.

Filtermedien werden bei der Herstellung von Filterelementen verarbeitet, z. B. werden Filtermedien laminiert, geprägt, gefaltet, plissiert oder geschnitten. Für diese Verarbeitungsschritte müssen sich die Filtermedien eignen. Ebenfalls müssen sich Filtermedien für Weiterverarbeitungsschritte wie ggf. Einspritzen, Einschäumen oder Umschäumen, Einkleben oder Verkleben eignen.

Die zunehmende Luftverunreinigung, insbesondere in Großstädten, in Verbindung mit dem Einsatz moderner Klimaanlagen macht es erforderlich, die von außen z. B. in den Innenraum eines Kraftfahrzeugs oder eines Hauses geleitete und aufbereitete bzw. klimatisierte Luft mittels geeigneter Filter zu reinigen. Hierfür kommen beispielsweise Partikelfilter, Geruchsfilter oder deren Kombination miteinander in Betracht, die in der Umgebungsluft enthaltene Schwebstoffe, Partikel und Gerüche möglichst gut herausfiltern bzw. adsorbieren sollen.

Zur Filterung von Luft, insbesondere für den Innenraum eines Kraftfahrzeugs, werden häufig gefaltete bzw. plissierte Filtermedien, die ein Faltenpack bilden, eingesetzt. Hierzu wird ein zunächst flächiger Filtermaterialbogen zickzackförmig gefaltet oder auch gewellt. Das Faltenpack wird beispielsweise von Seitenbändern und Kopfbändern oder einem sonstigen Rahmen gehalten. Derartige Filterelemente können in einer Filteraufnahme austauschbar fixiert sein. Die somit gebildete Filteranordnung kann in einer Klimaanlage eines entsprechenden Kraftfahrzeugs sein. Durch die Faltenbildung kann die Filterfläche in einer vorgegebenen Baugröße maximiert und dadurch die Mediengeschwindigkeit, die Durchflussgeschwindigkeit durch das Filtermedium, gesenkt werden. Hierdurch können z. B. ein geringerer Durchflusswiderstand und eine höhere Filtrationseffizienz erreicht werden bzw. kann dadurch die Lebensdauer erhöht werden.

### Stand der Technik

Vliesstoffe als Filtermedien sind grundsätzlich bekannt. Je nach Anwendung wird von dem Filtermedium eine gewisse Steifigkeit, ein bestimmtes Rückhaltevermögen für Partikel in dem zu filternden Fluid, eine bestimmte Durchlässigkeit bzw. ein bestimmter Druckverlust und bestimmte Materialeigenschaften verlangt. Beispielsweise wurden Vliesgewebeverbünde vorgeschlagen, die mittels einer Wasserstrahlvernadelung verfestigt und auf einer Trägerstruktur angebracht werden. Die DE 10 2011 009 227 A1 offenbart beispielsweise ein Verfahren zum Herstellen eines entsprechenden Vlieses, bei dem eine hydrodynamische Vernadelung erzielt wird, um Nass- oder Trockenfilze zu erzeugen.

Die EP 2 479 331 B1 schlägt vor, Mehrkomponentenfasern, die als Spinnvliese verarbeitet sind, aufzuspalten, um eine besonders feine Faserstruktur zu erhalten. Dabei werden mehrlagige Vliese insbesondere zur Anwendung in Hygieneprodukten erzeugt.

Aus der US 2002/0013111 A1 sind splitbare Polyesterfasern aus mehreren Komponenten bekannt. Die Fasern werden als Stapelfasern zu einem flächigen Material verarbeitet und vernadelt. Gemäß der US 2002/0013111 A1 wird eine hydrodynamische Vernadelung mit Wasserstrahlen durchgeführt, die die mehreren Komponenten der einzelnen Fasern aufspalten und damit besonders dünne und feine Faserstrukturen entstehen.

Häufig enthalten Vliesstoffe auch Bikomponentenfasern als sogenannte Kern-Mantelfasern. Z. B. beschreibt die US 20070220852 A1 einen Spinnvliesstoff mit Kern-Mantelfasern als Bindefasern als Filtermedium. Hierbei hat der Kern z. B. einen höheren Schmelzpunkt als der Mantel, sodass durch Erwärmen bis zur Erweichungs- oder Schmelztemperatur des Mantels eine Verbindung der Bindefasern untereinander und mit anderen Fasern des Vliesstoffs ermöglicht wird und hierdurch ein stabiler Vliesstoff realisiert wird.

US 2010/0159770 A1 und US 5,970,583 offenbaren Spinnvliese umfassend aufsplittbare kreissegmentierte Bikomponentenfasern, zur Verwendung als Filtermedien.

### Offenbarung der Erfindung

Es ist daher eine Aufgabe der vorliegenden Erfindung, ein Spinnvliesmaterial, einen Gegenstand, der das Spinnvliesmaterial aufweist, insbesondere ein Isolier- oder Verpackungsmaterial, ein darauf basierendes verbessertes Filtermedium, insbesondere zum Einsatz als Innenraumluftfilter, z. B. in Fahrzeugen, oder im Bereich HVAC, z. B. in der Gebäudetechnik bereitzustellen. Des Weiteren ist es eine Aufgabe ein verbessertes oder alternatives Filterelement für eine Filteranordnung bereitzustellen.

### Filtermedium: Geometrie

Demgemäß wird ein Filtermedium zum Filtern eines Fluids mit einem Spinnvliesmaterial vorgeschlagen, welches zumindest teilweise aus segmentierten, insbesondere kreissegmentierten, Mehrkomponentenfasern mit mindestens einer ersten Kunststoffkomponente und einer zweiten Kunststoffkomponente gebildet ist.

Kreissegmentierte Mehrkomponentenfasern sind in der Literatur und Technik auch als Segmented-Pie-Fasern bekannt. Haben Mehrkomponentenfasern im Wesentlichen zwei Komponenten, so werden sie als Bikomponentenfasern bezeichnet. Andere Konfigurationen von Mehrkomponentenfasern sind z. B. Kern-Mantelfasern, bei denen ein Kern aus einer Komponente von einem Mantel aus einer anderen Komponente umgeben ist. Auch Side-by-Side-Konfigurationen von Mehrkomponentenfasern sind bekannt.

Das flächige Filtermedium eignet sich insbesondere zur Verwendung in einem Innenraumluftfilter für Zuluft in einem Kraftfahrzeug oder in HVAC Anwendungen. Es hat sich gezeigt, dass kreissegmentierte Mehrkomponentenfasern, die durch ein Spinnvliesverfahren gewonnen sind, günstige Filtrationseigenschaften haben. Mehrkomponentenfasern können auch als Poly- oder Multikomponentenfasern bezeichnet werden.

Unter "segmentiert" wird verstanden, dass im Wesentlichen entlang der Längenausdehnung der Fasern Grenzflächen zwischen den verschiedenen Kunststoffkomponenten vorliegen. Es ist nicht ausgeschlossen, dass innerhalb der Mehrkomponentenfasern weitere Segmente oder sich entlang der Längenausdehnung erstreckenden Kunststoffkomponenten vorliegen. Im Querschnitt einer entsprechenden Mehrkomponentenfaser ergibt sich eine Ansicht in der Art von Tortenstücken, die aus verschiedenen Kunststoffkomponenten gebildet sind.

Grundsätzlich ist es denkbar, dass der Begriff Kunststoffkomponente nicht bedeutet, dass die Segmente unterschiedliche Zusammensetzungen haben. Grenzflächen zwischen den Segmenten könnten auch durch den Herstellungsprozess erzeugt werden. Im Rahmen dieser Erfindung beschreibt der Begriff Kunststoffkomponente jedoch die Zusammensetzung des Materials eines Segmentes und bei einer Mehrkomponentenfaser liegen mindestens zwei unterschiedliche Zusammensetzungen vor.

Die Mehrkomponentenfasern des als Filtermediums eingesetzten Spinnvliesstoffes haben einen kreisförmigen Querschnitt. Im Vergleich zu üblichen Spinnvliesstoffen, bei denen beim Einsatz als Filtermedium die Mehrkomponentenfasern im Wesentlichen gesplittet sind. Dort haben die aus den Komponenten sich ergebenden Faserabschnitte in der Regel einen unregelmäßigen, beispielsweise dreieckigen Querschnitt.

Bei Ausführungsformen des Filtermediums hat eine jeweilige kreissegmentierte Mehrkomponentenfaser eine Mantelfläche, und die Kunststoffkomponenten grenzen an den Mantelflächen der Mehrkomponentenfasern aneinander.

In Ausführungsformen weist die Mantelfläche entlang von Grenzflächen zwischen den Kunststoffkomponenten einer jeweiligen Mehrkomponentenfaser Längsrillen auf. Beispielsweise können sich die Längsrillen im Herstellungsprozess durch ein Anschmelzen oder aufgrund der Oberflächenspannung des noch flüssigen Kunststoffmaterials beim Spinnen ergeben. Im Wesentlichen kann eine jeweilige Mehrkomponentenfaser eine glatte Oberfläche aufweisen. Zum Beispiel ist denkbar, dass die Mantelfläche entlang eines Umfangs eine gemittelte Rautiefe von weniger als 2 µm aufweist.

Die sich entlang der Längenausdehnung der Mehrkomponentenfasern erstreckenden Grenzschichten oder Grenzflächen zwischen den Kunststoffkomponenten können zu einer verbesserten Filterwirkung führen. Elektrische Aufladungen oder geometrische Übergänge, wie Kanten oder Rillen, können das Auffangen von Partikeln aus dem zu filternden Fluid verbessern.

Abhängig von den angestrebten Eigenschaften des Filtermediums können die kreissegmentierten Mehrkomponentenfasern in unterschiedlichen Faserdicken vorliegen. In bestimmten Ausführungsformen des Filtermediums haben die kreissegmentierten Mehrkomponentenfasern einen mittleren Durchmesser von zwischen 10 µm und 40 µm, bevorzugt zwischen 15 µm und 30 µm. In anderen Ausführungsformen beträgt der mittlere Durchmesser zwischen 20 µm und 60 µm, und ist bevorzugt zwischen 30 µm und 40 µm.

Bei den vorgeschlagenen Mehrkomponentenfasern haften die jeweiligen ersten und zweiten Kunststoffkomponenten aneinander und bilden im Ganzen die kreissegmentierte Faser aus. Bei bekannten Filtermedien, die Mehrkomponentenfasern aufweisen, welche gesplittet, verfilzt oder vernadelt sind, ergeben sich in der Regel kleinere mittlere Durchmesser.

In Ausführungsformen umfassen die segmentierten Mehrkomponentenfasern mindestens vier, sechs, oder acht Kreissegmente. Bevorzugt sind 16 Kreissegmente, aber eine höhere Anzahl an Kreissegmenten ist ebenfalls möglich. Es ergeben sich beispielsweise bei 16 Kreissegmenten entlang der Länge einer jeweiligen Mehrkomponentenfaser auch 16 Grenzflächen der Kunststoffkomponenten zueinander. Diese Grenzflächen können vorteilhaft für die Filtrationseigenschaften sein. Die Grenzflächenzahl muss jedoch mit einem effizienten Herstellungsverfahren abgewogen werden.

Die Mehrkomponentenfasern können derart ausgestaltet sein, dass sie unter Einfluss einer Wasserstrahlbehandlung nicht voneinander aussplitten. Beispielsweise kann durch die Wahl der Kunststoffkomponenten eine gute Haftung derselben aneinander eingestellt werden. Durch das Erhalten der Mehrkomponentenfasern als ungesplittete Fasern wird das Filtermedium robust, und andererseits besonders effizient.

Eine Wasserstrahlbehandlung oder auch eine andere Behandlung, die zum Aufsplitten der Mehrkomponentenfasern bzw. einer Mehrheit der Mehrkomponentenfasern führt, kann jedoch bei der Herstellung des Vliesstoffes und seiner Verarbeitung zum Filterelement auch vermieden werden. D. h. erfindungsgemäß ist auch ein Spinnvliesstoff aus einer Mehrkomponentenfaser in kreissegmentierter Konfiguration, der als Filtermedium eingesetzt wird ohne wasserstrahlverfestigt zu sein.

Der Anteil von Mehrkomponentenfasern in dem Filtermedium, bei denen die Kreissegmente an inneren Segmentgrenzen der Mehrkomponentenfasern entlang ihrer Längenausdehnung miteinander verbunden sind, ist mindestens 70 % und bevorzugt mindestens 80 %. Der Anteil lässt sich beispielsweise mikroskopisch ermitteln, indem aus einem vorgegebenen Bereich des Spinnvliesmaterials Fasern hinsichtlich des Aufsplittens ihrer Kunststoffkomponenten untersucht werden.

Die Kreissegmente sind voneinander gesplittet bei einem Längenteil der Mehrkomponentenfasern des Filtermediums von maximal 50 %. Vorzugsweise sind weniger als 30 % der Mehrkomponentenfasern hinsichtlich ihrer Länge gesplittet, und noch bevorzugter sind maximal 20 % der Mehrkomponentenfaserlänge gesplittet. Bei einem Längenanteil kann eine jeweilige Faser oder ein Faserabschnitt untersucht werden, und der Längenanteil von zusammenhängenden Kreissegmenten mit dem Längenanteil von voneinander gesplitteten Kreissegmenten überprüft werden. Dadurch ergibt sich der Längenanteil der Mehrkomponentenfasern, die gesplittet oder ungesplittet sind.

In Ausführungsformen des Filtermediums sind die Mehrkomponentenfasern des Spinnvliesmaterials entlang der Maschinenrichtung orientiert. Die Maschinenrichtung ergibt sich beispielsweise durch das Ablegen von Spinnvliesfilamenten auf einem beweglichen Ablagesiebbands.

Das Filtermedium ist thermisch verfestigt.

Bei dem Filtermedium sind die Kunststoffkomponenten miteinander verbunden. Die Kunststoffkomponenten werden bei Spinnvliesprozess miteinander verbunden. Denkbar ist auch, dass die Kunststoffkomponenten oder Segmente in Bereichen der Grenzen zwischen der ersten und der zweiten Kunststoffkomponente miteinander teilweise verschmolzen werden. Dadurch kann sich eine besonders gute Haftung der Segmente miteinander ergeben.

In Ausführungsformen ist das Filtermedium bzw. sind die Mehrkomponentenfasern mit Hilfe eines Heißluftbondings miteinander verbunden, insbesondere ausschließlich mit Hilfe eines Heißluftbondings miteinander verbunden. Das Spinnvliesmaterial hat dann eine Dicke zwischen 1,0 und 2,0 mm. Vorzugsweise ist die Dicke zwischen 1,2 und 1,8 mm, und noch bevorzugter zwischen 1,3 und 1,7 mm. Bei einer Dicke zwischen 1 und 2 mm ergibt sich eine günstige Weiterverarbeitbarkeit des auch als Halbzeug zu bezeichnenden vorverfestigten Spinnvliesmaterials, beispielsweise für eine weitere Verdichtung oder Verfestigung.

In Ausführungsformen des Filtermediums sind die Mehrkomponentenfasern unter thermischer Einwirkung zu einem Vliesstoff miteinander verbunden. Dies kann beispielsweise durch Einstrahlung von Wärme oder Heißluft auf den auf Siebbändern laufenden Spinnvliesmaterialien realisiert werden. Das Spinnvliesmaterial hat nach der zusätzlichen thermischen Einwirkung beispielsweise eine Dicke zwischen 0,5 und 1,5 mm, vorzugsweise zwischen 0,8 und 1,3 mm. Durch eine Verdichtung oder Verfestigung des zunächst als Vliesstoff bereitgestellten Mediums wird eine verbesserte mechanische Widerstandskraft erzielt.

Die angegebenen Dicken liefern bei einem entsprechenden Spinnvliesmaterial mit vorzugsweise nicht oder mehrheitlich nicht gesplitteten Mehrkomponentenfasern gute Filtrationseigenschaften. Dabei spielt beispielsweise die Anzahl der Grenzflächen zwischen verschiedenen Kunststoffkomponenten eine Rolle sowie der Abstand von entsprechenden Grenzflächen zwischen verschiedenen Fasern im Spinnvliesmaterial.

In weiteren Ausführungsformen des Filtermediums hat das Spinnvliesmaterial Faltungen mit mehreren zwischen Faltenkanten angeordneten Faltabschnitten. Das Spinnvliesmaterial hat aufgrund seiner mechanischen Eigenschaften und der zumindest teilweise, vorzugsweise mehrheitlich, ungesplitteten Mehrkomponentenfasern eine gute Formstabilität, die sich für Faltungen eignet. Die Faltungen können dabei vorzugsweise quer zur Maschinenrichtung verlaufen, so dass orientierte Fasern in ihrer Länge gefaltet oder geknickt sind.

### Filtermedium: physikalische Eigenschaften

In Ausführungsformen werden die Kunststoffkomponenten der Mehrkomponentenfasern als Elektrete aufgeladen. Das heißt, es werden Ladungen an den Kunststoffkomponenten akkumuliert. Denkbar ist dabei, dass die verschiedenen Kunststoffkomponenten, obgleich sie dieselbe Materialzusammensetzung haben können, eine unterschiedliche Ladungskonfiguration aufweisen. Dadurch ergibt sich insbesondere an den Grenzflächen der Kreissegmente eine spezielle elektrische Feldkonfiguration, die sich vorteilhaft auf die Filtrationseigenschaft auswirken kann.

Das Filtermedium umfasst in Ausführungsformen ein Spinnvliesmaterial mit einem Flächengewicht zwischen 80 und 160 g/m². Die sogenannte Grammatur wird insbesondere nach DIN 29073-1 gemessen. Vorzugsweise kann das Flächengewicht zwischen 90 und 110 g/m² betragen. In anderen Ausführungsformen ist das Flächengewicht zwischen 80 und 100 g/m² eingestellt, und in wieder anderen Ausführungsformen zwischen 110 und 150 g/m².

In Ausführungsformen hat das Spinnvliesmaterial insbesondere eine Biegesteifigkeit von mehr als 170 mN, bevorzugt von mehr als 180 mN, und weiter bevorzugt von mehr als 200 mN. Eine Messung der Biegesteifigkeit erfolgt insbesondere nach DIN 53121 nach der Balkenmethode mit einem modifizierten Biegewinkel von 15°. Durch den Einsatz von Mehrfachkomponentenfasern, vorzugsweise in Kreissegment-Konfiguration, vorzugsweise als Bikomponentenfaser, die teilweise, bevorzugt überwiegend, ungesplittet sind und thermisch verfestigt sind, ergibt sich eine gute Biegesteifigkeit des Filtermediums, die die weitere Verarbeitung beispielsweise in Filterelementen vereinfacht, und gleichzeitig eine gute Luftdurchlässigkeit.

Das Filtermedium kann in Ausführungsformen ferner ein Schmelzblasmaterial umfassen. Ein erfindungsgemäßes Spinnvlies kann beispielsweise als Träger für ein Schmelzblasmaterial, ein Meltblown-Vlies, dienen und zusammen mit diesem ein mehrlagiges Filtermedium ausbilden. Unterschiedliche Kombinationen von Schmelzblasvliesschichten und Spinnvliesschichten sind denkbar.

In einer Ausführungsform des erfindungsgemäßen Filtermediums ist der Spinnvliesstoff mit den zumindest teilweise, vorzugsweise mehrheitlich ungesplitteten kreissegmentierten Mehrkomponentenfasern, vorzugsweise Bikomponentenfasern mit einer Feinstfaserlage, insbesondere mit einer Nanofaserlage, also einer Lage, bei der der durchschnittliche Faserdurchmesser kleiner als 1 µm ist, versehen.

Weitere Ausführungsformen mit Kombinationen des erfindungsgemäßen Spinnvliesstoffs mit Schmelzblasschichten und Feinstfaserlagen sind selbstverständlich denkbar.

Es ist ferner möglich, dass das Filtermedium Adsorberpartikel, beispielsweise Aktivkohle oder andere Adsorbermaterialien, zum Filtern bzw. Adsorbieren von flüchtigen Stoffen umfasst. Das Filtermedium ist insofern geeignet, Kohlenwasserstoffe aus zu filternder Luft zu entfernen.

Insbesondere kann auf den erfindungsgemäßen Spinnvliesstoff Aktivkohle aufgebracht sein und kann mit einer weiteren Lage, z. B. einem Schmelzblasvlies oder auch mit Klebefäden oder Klebepunkten fixiert sein. Eine solche Schicht kann mit weiteren Schichten, z. B. einer oder mehreren Schmelzblasvliesen oder auch einem oder mehreren Spinnvliesstoffen abgedeckt sein.

### Filtermedium: Materialzusammensetzungen

In Ausführungsformen des Filtermediums bestehen die erste Kunststoffkomponente und/oder die zweite Kunststoffkomponente aus einem Polypropylen. Vorteilhaft ist, dass die erste Kunststoffkomponente einen ersten Schmelzpunkt hat und die zweite Kunststoffkomponente einen zweiten, anderen, Schmelzpunkt hat. Der erste Schmelzpunkt ist dann vorzugsweise höher als der zweite Schmelzpunkt, und zwischen dem ersten und dem zweiten Schmelzpunkt liegt ein Unterschied von mindestens 8 K. Vorzugsweise beträgt der Unterschied in den Schmelzpunkten mindestens 10 K, und weiter bevorzugt mindestens 15 K.

Durch eine Einstellung der Schmelzpunkte zueinander kann eine günstige haftende Verbindung zwischen den Kunststoffkomponenten und damit dem Kreissegmenten entlang der Länge der Mehrkomponentenfasern erzielt werden sowie bei der Herstellung des erfindungsgemäßen Spinnvliesstoffes bzw. des erfindungsgemäßen Filtermediums eine gute Verbindung bzw. Vernetzung der Mehrkomponentenfasern untereinander. Auch die runde, kreisförmige Faserform soll bei thermischen Belastungen, z. B. bei der Verfestigung, während des Herstellungsprozesses beibehalten werden.

In Ausführungsformen liegt der Massenanteil der ersten Kunststoffkomponente zwischen 60 und 80 %, bevorzugt zwischen 65 und 75 %. Durch eine Veränderung des Massenanteils der Kunststoffkomponente können mechanische Eigenschaften der Mehrkomponentenfasern bestimmt werden. Selbstverständlich können die Kunststoffkomponenten auch Mischungen und Blends mehrerer Kunststoffmaterialien beispielsweise mehrerer thermoplastischer Materialien umfassen.

In Ausführungsformen des Filtermediums haben die erste Kunststoffkomponente und/oder die zweite Kunststoffkomponente einen ersten Anteil eines ersten thermoplastischen Materials mit einem ersten Schmelzpunkt und einen zweiten Anteil eines zweiten thermoplastischen Materials mit einem zweiten Schmelzpunkt. Durch die Auswahl der Anteile des ersten und zweiten thermoplastischen Materials lassen sich die sich ergebenden Schmelzpunkte für die Kunststoffkomponenten oder auch andere Eigenschaften wie Viskosität einstellen. Dadurch wird die Herstellung im Spinnverfahren erleichtert.

In Ausführungsformen des Filtermediums ist insbesondere eine der beiden Kunststoffkomponenten von unterschiedlichen Mehrkomponentenfasern zur Verfestigung des Spinnvliesmaterials miteinander teilweise verschmolzen. Zum Beispiel ist es möglich, dass eine Kunststoffkomponente mit dem niedrigeren Schmelzpunkt innerhalb der Fasern bei einer thermischen Verfestigung anschmilzt und Fasern aneinander haften und dadurch ein Fasernetzwerk ausbilden.

In Ausführungsformen ist das erste thermoplastische Material ein Polypropylen-Homopolymer. Das zweite thermoplastische Material kann dann insbesondere ein Metallocen-Polypropylen sein. Denkbar ist ferner, dass das erste oder zweite thermoplastische Material ein Co-Polypropylen ist.

In Ausführungsformen hat das flächige Spinnvliesmaterial in einem jeweiligen Flächenbereich von 10 cm² eine Steife, dass es selbsttragend ist. Das Spinnvliesmaterial ist dabei insbesondere thermisch versteift. Unter selbsttragend wird verstanden, dass die Fläche von 10 cm² unter dem Eigengewicht nicht durchhängt, durchbiegt oder bricht.

### Filtermedium: Filtrationseigenschaften

Das Spinnvliesmaterial des Filtermediums hat in Ausführungsbeispielen eine Luftdurchlässigkeit bei 200 Pa zwischen 500 l/m²s und 6000 l/m²s. Die Luftdurchlässigkeit wird dabei insbesondere nach EN ISO 9237 gemessen.

In Ausführungsformen hat das Spinnvliesmaterial ein NaCI-Rückhaltevermögen bei 0,3 µm Partikelgröße von mehr als 10 %. In Ausführungsformen wird mehr als 30 %, und bevorzugt mehr als 40 % NaCl-Rückhaltevermögen erzielt. In besonders bevorzugten Ausführungsformen hat das Spinnvliesmaterial ein NaCI-Rückhaltevermögen von mehr als 50 %. Das Rückhaltevermögen wird z. B. nach DIN 71460-1 bestimmt.

Es können aber auch Spinnvliesstoffe z. B. als Trägermaterial in einem Filtermedium bereitgestellt werden, bei denen das NaCI-Rückhaltevermögen geringer als 10 % ist.

In Ausführungsformen hat das Spinnvliesmaterial eine Staubspeicherkapazität bei einem Differenzdruckanstieg von 50 Pa von mehr als 20 g/m², vorzugsweise mehr als 30 g/m². In Ausführungsformen können ferner Staubspeicherkapazitäten bei 50 Pa von mehr als 40 g/m², und bevorzugt mehr als 50 g/m² erzielt werden. Die Staubspeicherkapazität wird dabei z. B. nach DIN 71460-1 bestimmt.

Ein insbesondere offenes Filtermedium kann dazu eingerichtet sein, Partikel des Teststaubs nach ISO 12103-1 aus einem Luftstrom mit einer Filtrationsgeschwindigkeit von 0,10 bis 0,30 m/s, bezogen auf die Filtermedienfläche, bei einer Luftdurchlässigkeit von größer 3000 l/m²s (bestimmt gemäß ISO 9237 bei 200 Pa) zu entfernen. Die Ermittlung der Filtrationskennwerte kann beispielsweise gemäß DIN 71460-1 erfolgen.

Ein insbesondere hochabscheidendes Filtermedium kann dazu eingerichtet sein, Partikel des Teststaubs nach ISO 12103-1 sowie NaCI-Aerosolpartikel gemäß DIN 71460-1 aus einem Luftstrom mit einer Filtrationsgeschwindigkeit von 0,10 bis 0,30 m/s, bezogen auf die Filtermedienfläche, bei einer Luftdurchlässigkeit von größer 600 l/m²s (bestimmt gemäß ISO 9237 bei 200 Pa) zu entfernen. Die Ermittlung der Filtrationskennwerte kann beispielsweise gemäß DIN 71460-1 erfolgen.

### Filterelemente: Aufbau

In Ausführungsformen umfasst ein Filterelement ein wie zuvor oder im Folgenden weiter beschriebenes Spinnvliesmaterial, das zumindest teilweise aus kreissegmentierten Mehrkomponentenfasern mit mindestens einer ersten Kunststoffkomponente und einer zweiten Kunststoffkomponente gebildet ist, wobei ein Anteil von Mehrkomponentenfasern, bei denen die Kreissegmente an inneren Segmentgrenzen der Mehrkomponentenfasern entlang ihrer Längenausdehnung miteinander verbunden sind, mindestens 50 %, bevorzugt 70 %, weiter bevorzugt 80 % beträgt.

In einer weiteren Ausführungsform beträgt der Anteil der kreissegmentierten Mehrkomponentenfasern an dem Spinnvliesmaterial über 50 %, bevorzugt über 80 %.

Insbesondere kann das Filterelement ein Filtermedium mit einem wie zuvor oder im Folgenden beschriebenen Spinnvliesmaterial aufweisen. Das Filtermedium ist vorzugsweise zu einem Faltenpack zickzackförmig gefaltet. Durch eine zickzackförmige Faltung wird insgesamt die im Faltenpack untergebrachte Filterfläche vergrößert.

Durch die mechanischen Eigenschaften des Spinnvliesmaterials, welche sich insbesondere durch die weitestgehend ungesplitteten Mehrkomponentenfasern in der Art von Segmented-Pie-Fasern ergeben, kann ein gut handhabbares und verarbeitbares Faltenpack erzeugt werden.

In Ausführungsformen des Filterelementes umfasst dasselbe an gegenüberliegenden Faltprofilen des Faltenpacks Seitenbänder. Es können ferner an gegenüberliegenden Endfalten des Faltenpacks angebrachte Kopfbänder vorgesehen sein. Aufgrund der eingesetzten Fasern und die sich dadurch ergebende Stabilität, wie beispielsweise Steifigkeit und Abscheideleistung des Filtermediums, können auch Filterelemente gebildet werden, die keine Endfaltenverstärkung oder Kopfbänder aufweisen. Es wird dadurch ein einfaches und günstig herstellbares Filterelement geschaffen.

Das Filterelement umfasst beispielsweise das vorgeschlagene Spinnvliesmaterial als Filtermedium bzw. Filtermaterial und ein oder mehrere Stabilisierungselemente, insbesondere Seitenbänder und/oder Kopfbänder (auch als Stirnbänder bezeichnet), welche das Filtermedium zumindest abschnittsweise stabilisieren, um dessen Form, insbesondere im Filterbetrieb, aufrechtzuerhalten. Die Stabilisierungselemente können insbesondere einen geschlossenen oder offenen Rahmen - auch materialeinstückig - ausbilden, welcher das Filtermedium umgibt.

Alternativ oder zusätzlich zu dem Filtermedium kann/können das/die Stabilisierungselement(e), bspw. die hierin genannten Seiten- und/oder Kopfbänder, das Spinnvliesmaterial aufweisen. Weiter alternativ oder zusätzlich können auch noch andere Vorrichtungsbestandteile des erfindungsgemäßen Filterelements das Spinnvliesmaterial aufweisen.

Die Stabilisierungselemente können mit dem Filtermedium randseitig stoffschlüssig verbunden, insbesondere verklebt oder verschweißt sein. Dazu können die Stabilisierungselemente erhitzt und das Filtermedium in das erhitzte Material eingedrückt werden. Alternativ können die Stabilisierungselemente an das Filtermedium angespritzt sein. Weiterhin kann ein Klebstoff als Zusatzwerkstoff zum Einsatz kommen. Die Stabilisierungselemente können selbst aus demselben Material wie das Filtermedium hergestellt sein. Alternativ können die Stabilisierungselemente als Kunststoffspritzgussbauteile ausgebildet sein. Die Stabilisierungselemente können steif oder flexibel sein.

Das Filterelement kann ferner eine Dichtung aufweisen, welche eine dem Filterelement zugeordnete Rohseite gegenüber einer Reinseite desselben abdichtet. Die Dichtung kann bauteilidentisch mit ein oder mehreren Stabilisierungselementen des Filterelements ausgeführt sein. Alternativ kann die Dichtung als Zusatzbauteil ausgebildet sein. So kann die Dichtung beispielsweise an dem Filtermedium, den ein oder mehreren Stabilisierungselementen, dem Filterelement oder der Filteraufnahme angebracht sein.

Das Filtermedium kann gefaltet oder auch nur wellenförmig ausgebildet sein. Als Faltungen sind beispielsweise Zickzack- M- oder W-Faltungen bekannt. Das Filtermedium kann geprägt und anschließend an Prägekanten unter Ausbildung von Faltkanten scharfkantig gefaltet sein. Als Ausgangsmaterial dient ein flächiger Materialbogen des Spinnvlieses, welcher entsprechend umgeformt wird. Weiter kann das Filtermedium zusätzlich verfilzt oder genadelt sein. Das Filtermedium kann neben dem Spinnvliesmaterial Naturfasern, wie Baumwolle, oder Kunstfasern, beispielsweise aus Polyester, Polyphenylsulfid oder Polytetrafluorethylen, aufweisen. Die jeweiligen Fasern können bei der Verarbeitung in, schräg und/oder quer zur Maschinenrichtung orientiert sein.

Weiterhin kann das Filtermedium eine antimikrobielle und/oder antiallergene Wirkung aufweisen. Als antimikrobieller Stoff kommt beispielsweise Zink-Pyrithion oder Nanosilber, als anitallergener Stoff beispielsweise Polyphenol in Betracht.

### Filterelemente: Anwendungen

Ein entsprechendes Filterelement dient der Filterung von Fluiden, also gasförmigen und/oder flüssigen Medien, beispielsweise Luft. Ein gasförmiges Medium bzw. Luft umfasst hier auch Gas- bzw. Luft-Feststoffgemische und/oder Gas- bzw. Luft-Flüssigkeitsgemische. Beispielsweise kann eine Klimaanlage das Filterelement aufweisen.

In Ausführungsformen ist das Filterelement ein Innenraum-Luftfilterelement für ein Kraftfahrzeug. Das Filterelement ist dabei in der Regel ein Austauschteil, das nach einer bestimmten Standzeit gewechselt wird. Die günstigen Eigenschaften des Filtermediums hinsichtlich der Filtereigenschaften sowie der mechanischen Eigenschaften erlauben einen verlängerten Einsatz oder Benutzungszeitraum bei hoher Filtrationsleistung.

Das Filterelement bzw. die Filteranordnung kann in Personenkraftwagen, Lastkraftwägen, Baumaschinen, Wasserfahrzeugen, Schienenfahrzeugen, Luftfahrzeugen sowie allgemein in der Klimatechnik, insbesondere in Heiz-Klimageräten, in Haushaltsgeräten, Bürogeräten, wie z. B. Computer, Drucker oder Kopiergeräte, in Brennstoffzellen oder in der Gebäudetechnik Anwendung finden. Diese Kraftwägen oder Fahrzeuge können elektrisch und/oder mittels Kraftstoff (insbesondere Benzin oder Diesel) betrieben werden. Im Hinblick auf die Gebäudetechnik kommen insbesondere stationäre oder auch mobile Anlagen zur Behandlung von Luft in Betracht. Bei Verbrennungskraftmaschinen aber auch bei Kompressoren ist auch eine Reinigung der Ansaugluft sowohl für die Verbrennungsluft als auch für die zu komprimierende Luft mit dem Filterelement möglich.

### Filterelemente: Form

Das Filterelement hat zum Beispiel äußere Begrenzungsflächen, die ein quaderförmiges Volumen einschließen. Die Faltkanten des Faltenpacks weisen dabei in der Regel zu der größten Begrenzungsfläche, und die Faltenhöhe bzw. Faltentiefe bestimmt die Größe der übrigen Begrenzungsflächen.

Die beiden, insbesondere größten, Begrenzungsflächen weisen in Ausführungsbeispielen jeweils eine Fläche zwischen 0,05 und 0,066 m² auf. Zum Beispiel beträgt die Länge der größten Begrenzungsfläche zwischen 290 und 295 mm, und die Breite 196 bis 201 mm. In weiteren Ausführungsformen hat das Faltenpack eine beispielsweise obere Begrenzungsfläche zwischen 0,053 und 0,062 m². In weiteren Ausführungsformen sind auch Flächen zwischen 0,056 und 0,06 m² möglich.

Entsprechende Größen können mit Hilfe des Filtermediums günstig zickzackförmig gefaltet ausgefüllt werden, so dass die jeweils benötigte Filterfläche erreicht wird. Aufgrund des hinsichtlich seiner Filtereigenschaften und seiner mechanischen Eigenschaften guten Filtermediums mit dem Spinnvliesmaterial aus hauptsächlich nicht gesplitteten Mehrkomponentenfasern kann grundsätzlich gegenüber konventionellen Filtermedien die Fläche bei gleicher Filterleistung reduziert werden. Dies führt zu einer Materialeinsparung.

In Ausführungsformen hat das Filterelement ein Filtermedium mit einer Fläche zwischen 0,458 und 0,472 m². Diese Fläche, welche bevorzugt zwischen 0,462 und 0,47 m² beträgt, kann durch das zickzackförmige Falten innerhalb des Faltenpacks mit seinen vorgegebenen Begrenzungsflächen angeordnet werden. In weiteren Ausführungsformen hat das Filtermedium eine Fläche zwischen 0,464 und 0,468 m². Meist sind die Faltungen des Faltenpacks quer zur Maschinenrichtung angeordnet. Das Faltenpack kann dann zum Beispiel in Maschinenrichtung einer Länge zwischen 285 und 300 mm aufweisen und zwischen 38 und 46 Faltungen umfassen. Die Faltenhöhen sind beispielsweise zwischen 25 und 31 mm. Ein derartig dimensioniertes Filterelement zeigt eine besonders gute Abscheideleistung, wenn es mit dem Filtermedium aus den Mehrkomponentenfasern ausgestattet ist.

### Herstellungsverfahren

Ein erfindungsgemäßes Spinnvlies kann folgendermaßen hergestellt werden. Mittels zumindest einer Spinnerette werden zumindest Mehrkomponentenfasern, insbesondere, Bikomponentenfasern ersponnen, die insbesondere eine kreissegmentierte, d. h. Segmented-Pie-Konfiguration aufweisen. Die Mehrkomponentenfasern können auch zusammen mit anderen Fasern als Mischung von Fasern ersponnen werden. Anschließend werden die Mehrkomponentenfasern mit Hilfe zumindest einer Kühlvorrichtung gekühlt, die Fasern werden verstreckt und auf einem Ablagesiebband zur Vliesbahn abgelegt. Die Vliesbahn wird einer Heißfluid-Verfestigung unterzogen, wobei die Vliesbahn dabei flächig mit Heißfluid beaufschlagt wird und wobei zusätzlich bei der Heißfluidbeaufschlagung flächig Druck auf die Vliesbahn ausgeübt wird.

Die Vliesbahn wird hierbei bevorzugt in einer ersten Verfestigungsstufe auf dem Ablagesiebband flächig mit Heißluft beaufschlagt. Im Anschluss daran oder im Anschluss an das Ablegen auf dem Ablagesiebband wir die Vliesbahn in einer zweiten Verfestigungsstufe, in einem Doppelbandofen, flächig mit Heißluft beaufschlagt, wobei zusätzlich und zugleich flächig Druck auf die Vliesbahn ausgeübt wird. Die flächige Druckausübung auf die Vliesbahn erfolgt mit einem Druck zwischen 5 und 15 Pa.

Vorzugsweise wird mit Mehrkomponentenfasern bzw. mit Bikomponentenfasern gearbeitet, bei denen eine Komponente mehr als 50 Gew.-%, bevorzugt mehr als 60 Gew.-% der Gesamtfaser bildet und wobei diese Komponente vorzugsweise aus einem Polyolefin und sehr bevorzugt aus einem Polypropylen besteht.

Die erste flächige Heißfluid-Verfestigung auf dem Ablagesiebband kann als Vorverfestigung in einem Durchström-Ofen erfolgen. Dabei wird mit einer Fluidtemperatur gearbeitet, die unterhalb des Schmelzpunktes der am höchsten schmelzenden Komponente der Fasern liegt und bei der zumindest eine niedriger schmelzende Komponente - bei Bikomponentenfasern die niedriger schmelzende Komponente der Bikomponentenfasern - angeschmolzen bzw. aufgeschmolzen wird. Dadurch verbinden sich diese Fasern an den Kontaktstellen mit den benachbart liegenden Fasern. Auf diese Weise entsteht ein transportfähiger Vliesbahnverbund, der anschließend der zweiten Verfestigungsstufe zugeführt wird. Zweckmäßigerweise wird die Vliesbahn in der ersten Verfestigungsstufe bzw. in der ersten Heißfluid-Verfestigung von einem heißen Fluid, insbesondere von heißer Luft mit einer Anströmgeschwindigkeit von 1 bis 3 m/s angeströmt.

In der zweiten Verfestigungsstufe im Doppelbandofen findet die Endverfestigung und Kalibrierung der Vliesbahn statt. Die Vliesbahn ist dazu zwischen zwei umlaufenden Endlosbändern bzw. Siebbändern eingeklemmt und zwar bevorzugt zwischen einem Transportband und einem darüber angeordneten höhenverstellbaren Kalibrierband. Mit Hilfe der beiden Siebbänder wird flächig Druck auf die Vliesbahn ausgeübt, die dabei bzw. zugleich von dem heißen Fluid bzw. von der Heißluft durchströmt wird. In der zweiten Verfestigungsstufe liegt die Temperatur unterhalb des Schmelzpunktes der am höchsten schmelzenden Komponente der Fasern. Zweckmäßigerweise wird dabei zumindest eine niedriger schmelzende Komponente der Fasern - bei Bikomponentenfasern die niedriger schmelzende Komponente - angeschmolzen bzw. aufgeschmolzen. Die Vliesbahn wird in dem Doppelbandofen von heißer Luft mit einer Anströmgeschwindigkeit 1 bis 3 m/s angeströmt. Die Temperatur der Heißluft für die erste Heißfluid-Verfestigung und/oder für die zweite Heißfluid-Verfestigung beträgt mindestens 100 °C, bevorzugt 120 bis 160°C.

Im Anschluss an die zweite Verfestigungsstufe bzw. im Anschluss an die zweite Heißluft-Verfestigung kann die Vliesbahn elektrisch aufgeladen werden. Die elektrische Aufladung erfolgt nach einer Abkühlung der Vliesbahn im Rahmen der zweiten Heißfluid-Verfestigung. Die elektrische Beladung der Vliesbahn erfolgt durch Führung der Vliesbahn durch ein statisches elektrisches Feld, wobei die elektrische Aufladeeinrichtung zur Aufladung der Vliesbahn zwei bis drei Beladebalken mit jeweils 30 kV aufweist. Verfahren und Vorrichtungen zum elektrostatischen Aufladen von Vliesmaterialien sind in der US 5,401,446 angegeben, auf welche hier vollinhaltlich Bezug genommen wird ("incorporation by reference"). Die darin gezeigten und beschriebenen Vorrichtungen der Fig. 1 bis 4 der US 5,401,446 werden in Ausführungsformen des Verfahrens zum Laden der Mehrkomponentenfasern eingesetzt.

Bei einem mit einem Spunbond-Verfahren erzeugten Spinnvlies werden die Fasern mit der Spinnerette als Endlosfilamente ersponnen. Der Begriff "Fasern" kann dabei auch jeweils durch "Endlosfilamente" oder "Filamente" ersetzt werden.

Grundsätzlich können auch Mischungen der verschiedenen Konfigurationen Segmented-Pie-Konfiguration, Kern-Mantel-Konfiguration und/oder eine Seite-an-Seite-Konfiguration der Bikomponentenfilamente bzw. Mehrkomponentenfilamente eingesetzt werden. Die Kunststoffkomponenten der Mehrkomponentenfilamente bzw. die beiden Kunststoffkomponenten der Bikomponentenfilamente weisen dabei zweckmäßig meist unterschiedliche Schmelzpunkte auf.

Bei den Mehrkomponentenfilamenten bzw. mit Bikomponentenfilamenten bildet eine Komponente mehr als 50 Gew.-%, vorzugsweise mehr als 55 Gew.-%, bevorzugt mehr als 60 Gew.-% und sehr bevorzugt 65 bis 75 Gew.-% des Gesamtfilamentes.

Zumindest eine Komponente, vorzugsweise beide bzw. alle Komponenten der Mehrkomponentenfilamente bzw. Bikomponentenfilamente bestehen aus einem Polyolefin. Zweckmäßigerweise handelt es sich bei diesem Polyolefin um Polypropylen. Für die Komponenten der Endlosfilamente können auch Polyolefin-Blends eingesetzt werden. Die Begriffe "Polyolefin" und "Polypropylen" umfassen auch entsprechende Blends von Polyolefinen bzw. von Polypropylenen oder auch Copolymere von Polyolefinen bzw. von Polypropylenen.

Die so erzeugten Spinnvliese bzw. Vliesbahnen haben ein Flächengewicht zwischen 10 und 1000 g/m2, vorzugsweise zwischen 40 und 250 g/m2.

Ein erfindungsgemäß hergestelltes Spinnvlies kann Bestandteil eines Laminates aus mehreren Lagen sein, wobei zumindest eine Lage bzw. ein Teil der Lagen ebenfalls aus Spinnvliesen bzw. Vliesbahnen gebildet wird. Hier können beispielsweise Meltblown-Vliese zum Einsatz kommen. Nach einer Ausführungsvariante kann das Laminat bzw. Lagenaggregat bezüglich seiner Dickenausdehnung einen Gradienten des Faserdurchmessers bzw. Filamentdurchmessers aufweisen. Ein solches Laminat bzw. Lagenaggregat kann insbesondere mittels einer Mehrzahl von hintereinander geschalteten Spinnbalken erzeugt werden.

In Ausführungsformen des Verfahrens hat die erste Kunststoffkomponente einen ersten Schmelzpunkt und die zweite Kunststoffkomponente einen zweiten Schmelzpunkt. Der erste Schmelzpunkt ist dabei vorzugsweise höher als der zweite Schmelzpunkt, und zwischen dem ersten und zweiten Schmelzpunkt beträgt der Unterschied wenigstens 5 K. Vorzugsweise ist der Unterschied mindestens 10 K, oder weiter bevorzugt mindestens 12 K. Durch die Einstellung von Schmelzpunkten kann eine Verfestigung der gesponnenen Filamente und der abgelegten Filamente erzielt werden.

In Ausführungsformen des Herstellungsverfahrens werden das erste und das zweite Ausgangsmaterial getrennt voneinander geschmolzen und einem Spinnbalken mit Düsenöffnungen zugeführt. Die Düsenöffnungen werden dann derart angeordnet, dass segmentierte Filamente aus der ersten und der zweiten Kunststoffkomponente gebildet werden.

In einer Variante des Verfahrens werden mehrere Spinnbalken mit Düsenöffnungen verwendet.

Bei der Durchführung des Verfahrens können die Filamente mit Hilfe einer Primärluftzufuhr verstreckt, mit Hilfe von Sekundärluftzufuhr verwirbelt und zu einem Gespinst, insbesondere auf einem Siebband, abgelegt werden.

### Verwendungen

Es wird ferner eine Verwendung eines zuvor oder im Folgenden beschriebenen Filtermediums oder Spinnvliesmaterials vorgeschlagen. Insofern erfolgt eine Verwendung des Filtermediums oder eines Filterelementes zum Filtern eines mit Partikeln beladenen Gasstroms. Der mit Partikeln beladene Gasstrom kann dabei insbesondere Zuluft für den Innenraum eines Kraftfahrzeugs sein.

In Ausführungsformen wird das Filtermedium in einem Innenraumluftfilter für ein Kraftfahrzeug verwendet.

Die für die vorgeschlagenen Filtermedien und Spinnvliese beschriebenen Ausführungsformen und Merkmale gelten für das vorgeschlagene Herstellungsverfahren und umgekehrt.

Weitere mögliche Implementierungen der Erfindung umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Erfindung hinzufügen.

### Weitere Gegenstände mit dem erfindungsgemäßen Spinnvliesmaterial:

Die erfindungsgemäßen Spinnvliese weisen eine vergleichsweise geringe Dichte auf und zeichnen sich zudem durch eine ausgezeichnete Steifigkeit bzw. Festigkeit aus und haben eine hervorragende Permeabilität. Die hergestellten Vliesbahnen bzw. Spinnvliese weisen einen vorteilhaft geringen Abrieb auf und zeigen eine optimale Elastizität. Die erfindungsgemäß hergestellten Vliese bzw. Spinnvliese weisen optimale Isolationseigenschaften auf und zeigen, insbesondere bei Dichten von 50 bis 500 kg/m³, eine verhältnismäßig geringe Wärmeleitung bei nichtsdestoweniger ausreichender mechanischer Widerstandsfähigkeit. Diese Vliese bzw. Spinnvliese eignen sich deshalb hervorragend als Isoliermaterialien bzw. Komponenten von Isoliermaterialien für den Bausektor, Kraftfahrzeuge, Hausgeräte, Kühltaschen, Mikrowellen-Trays oder von Behältern für Heiß- und/oder Kaltgetränke und dergleichen. Weitere Vorteile der erfindungsgemäß erzeugten Vliese sind ihre einfache Faltbarkeit sowie ihre vorteilhaften Schallschutzeigenschaften. Wegen der optimalen mechanischen Eigenschaften sowie aufgrund der erfindungsgemäß erzielbaren Steifigkeit der Vliese können diese vorteilhaft auch für Verpackungen bzw. als Bestandteil von Verpackungen verwendet werden sowie als Komponenten von Aufbewahrungsboxen und dergleichen. Aufgrund der hierin näher ausgeführten mechanischen Eigenschaften des Spinnvliesmaterials eignet sich dieses auch besonders gut dazu, empfindliche Gegenstände vor Beschädigungen zu schützen, bspw. als Zwischenlage für steife Verpackungsteile. Hier kann im Übrigen auch die vorteilhafte Verwendung der erfindungsgemäß hergestellten Vliese als Bestandteil von Laminaten zum Einsatz kommen. Solche Laminate sind beispielsweise Folie-Vlies-Folie-Laminate und ähnliche Laminate. Erwähnenswert ist weiterhin, dass die Vliese im Rahmen der Erfindung mit verhältnismäßig gleichmäßiger Struktur erzeugt werden können und deshalb auch einfach bedruckbar sind. Dies fördert ihren Einsatz für Verpackungen und dergleichen. Zusammenfassend ist festzustellen, dass die erfindungsgemäß erzeugten Vliese bzw. Spinnvliese sich durch eine Vielzahl von Verwendungs- bzw. Einsatzmöglichkeiten auszeichnen.

Ferner ist eine Anwendung des Spinnvliesmaterials in Leichtbaukonstruktionen möglich und sinnvoll, bspw. als in den Kraftfluss eingebettetes Element, da das Spinnvliesmaterial bei einer vergleichsweise geringen Dichte eine ausgezeichnete Steifigkeit bzw. Festigkeit aufweist.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

### Kurze Beschreibung der Zeichnungen

### Es zeigen dabei:

- Fig. 1:: eine schematische Ansicht eines Ausführungsbeispiels für ein Filtermedium aus einem Spinnvliesmaterial;
- Fig. 2:: eine schematische perspektivische Ansicht eines Ausführungsbeispiels für eine Mehrkomponentenfaser zum Einsatz in einem Filtermedium;
- Fig. 3A bis 3C:: schematische Querschnittsansichten von weiteren Ausführungsbeispielen für Mehrkomponentenfasern;
- Fig. 4A bis 4C:: rasterelektronenmikroskopische Aufnahmen von Ausschnitten aus Ausführungsbeispielen von Spinnvliesmaterialien;
- Fig. 5:: ein Diagramm zur Erläuterung einer Rautiefe von Mehrkomponentenfasern;
- Fig. 6:: eine schematische Darstellung eines Ausführungsbeispiels für teilgesplittete Mehrkomponentenfasern;
- Fig. 7:: eine schematische Darstellung von Verfahrensschritten eines Ausführungsbeispiels zur Herstellung eines Gespinstes aus kreissegmentierten Filamenten;
- Fig. 8:: eine schematische Darstellung von Verfahrensschritten eines Ausführungsbeispiels zur Herstellung eines Filtermediums mit Hilfe eines Gespinstes, wie es in Fig. 7 beschrieben ist;
- Fig. 9:: eine schematische Schnittansicht eines Ausführungsbeispiels für ein mehrlagiges Filtermedium;
- Fig. 10:: eine schematische Schnittansicht eines weiteren Ausführungsbeispiels für ein mehrlagiges Filtermedium;
- Fig. 11:: eine perspektivische Darstellung eines Ausführungsbeispiels für ein aus einem Filtermedium gebildetes Faltenpack;
- Fig. 12:: eine schematische Darstellung eines allgemeinen Kraftfahrzeugs mit einer Filteranordnung;
- Fig. 13:: eine perspektivische Darstellung der Filteranordnung aus Fig. 12 umfassend ein Filtergehäuse mit einem darin aufgenommenem Innenraumfilter;
- Fig. 14:: eine perspektivische Darstellung des Innenraumfilters aus Fig. 13 umfassend einen Rahmen und ein Faltenpack; und
- Fig. 15:: Druckdifferenzkurven für Filterelemente mit verschiedenen Filtermedien.

In den Figuren bezeichnen dieselben Bezugszeichen gleiche oder funktionsgleiche Elemente, soweit nichts Gegenteiliges angegeben ist.

### Ausführungsform(en) der Erfindung

### Spinnvliesmaterial aus Mehrkomponentenfasern als Filtermedium

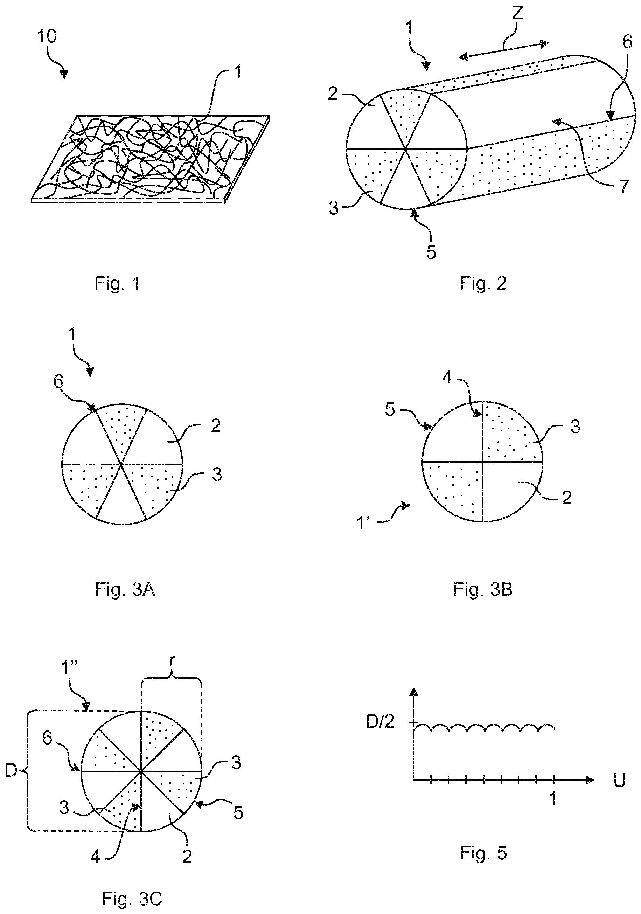

In der Figur 1 ist eine schematische Ansicht eines Ausführungsbeispiels für ein Filtermedium aus einem Spinnvliesmaterial gezeigt. Ein Vliesstoff ist ein Gebilde aus Fasern, die zu einem Vlies bzw. einer Faserschicht oder einem Faserflor zusammengefügt und miteinander verbunden sind. Man spricht auch von sogenannten Non-woven Materialien, da in Vliesen in der Regel kein Verkreuzen oder Verschlingen der Fasern, wie es bei Geweben oder anderen, insbesondere textilen Stoffen erfolgt. In einem Spinnvlies sind insbesondere Endlosfasern, die auch als Filamente bezeichnet sind, zu dem Vliesstoff zusammengefügt, was in der Fig. 1 durch die unregelmäßige Anordnung der Fasern 1 angedeutet ist. Gegenüber bekannten Stapelfaservliesstoffen haben die vorgeschlagenen Vliesstoffe 10, wie sie in der Fig. 1 angedeutet sind, Vorteile beim Einsatz als Filtermedien.

Bei einem Spinnblasprozess oder einem Spinnvliesverfahren wird das Vlies 10 erzeugt, indem Polymere aufgeschmolzen und durch ein Düsensystem zu Endlosfilamenten gesponnen werden. Diese Endlosfilamente sind dann einem Luftstrom ausgesetzt, der die Fasern bzw. Filamente verwirbelt. Anschließend erfolgt eine Ablage zu dem Gespinst. Optional können anschließend Verfestigungsverfahren eingesetzt werden, so dass ein flächiges Material beispielsweise zum Filtern von Partikeln in einem Gasstrom entsteht.

Das in Fig. 1 dargestellte Vliesmaterial 10 umfasst Endlosfasern, die segmentiert sind. Das heißt, eine jeweilige Faser, die als Mehrkomponenten- oder Polykomponentenfaser bezeichnet werden kann, ist aus einer ersten und einer zweiten Kunststoffkomponente gebildet. Im Herstellungsprozess werden die flüssigen Kunststoffkomponenten jeweils getrennt durch Düsen oder Löcher geführt und zu einer einzelnen Endlosfaser vereinigt.

In der Fig. 2 ist ein Beispiel für eine Mehrkomponentenfaser 1 angedeutet. In der schematischen Darstellung der Fig. 2 erkennt man eine Faser 1, welche entlang ihrer longitudinalen Ausdehnung Z eine Mantelfläche 7 hat. In der Fig. 2 ist die Faser 1 idealisiert als Zylinder angedeutet. Tatsächlich kann die Faser 1, wie sie in der Fig. 1 angedeutet ist, unregelmäßige Biegungen und Krümmungen aufweisen.

In der Fig. 2 ist stirnseitig eine Querschnittsfläche der Multikomponentenfaser 1 sichtbar. Man erkennt erste Kreissegmente 2, die sich entlang der Länge Z der Faser 1 erstrecken, und zweite Segmente 3, die sich ebenfalls entlang der Länge Z erstrecken. Die Segmente 2 bestehen aus einer ersten Kunststoffkomponente, und die Segmente 3, welche gepunktet dargestellt sind, aus einer zweiten Kunststoffkomponente. Durch die Art der Herstellung im Spinnblasverfahren schmiegen sich aufgeschmolzene Kunststoffkomponenten als Endlosfilamente zu der Mehrkomponentenfaser 1 zusammen. Bei dem Beispiel der Fig. 2 sind sechs Segmente vorhanden, die in der Art von Tortenstücken im Querschnitt angeordnet sind. Man spricht auch von sogenannten Segmented-Pie-Fasern.

Die beiden Kunststoffkomponenten 2, 3, die im Weiteren auch als Segmente bezeichnet werden, liegen seitlich nebeneinander und haften aneinander. Entlang der Längenausdehnung Z ergeben sich zwischen den beiden Kunststoffkomponenten bzw. den Segmenten 2, 3 äußere Segmentgrenzen 6. Da die Mehrkomponentenfaser 1 als ein Vollmaterial ausgebildet ist, ergeben sich innere Segmentgrenzen 4 ebenfalls zwischen den Segmenten 2, 3. Es sind auch andere Geometrien von Mehrkomponentenfasern denkbar. Denkbar ist auch zusätzlich zu den Kreissegmenten eine Ausprägung als Kern-Mantel-Struktur mit einer zusätzlichen Kunststoffkomponente oder einer der Kunststoffkomponenten der Kreissegmente im Inneren der Faser oder auch eine Faser mit Kreissegmenten, die im Inneren einen Hohlraum aufweist mit dennoch an der äußeren Mantelfläche vorliegenden äußeren Segmentgrenzen.

Die Fig. 3 zeigt beispielhaft schematische Querschnittsansichten von weiteren Ausführungsbeispielen. In der Fig. 3A ist der Querschnitt einer Mehrkomponentenfaser 1, wie in der Fig. 2 angedeutet ist, im Querschnitt dargestellt. Man erkennt wiederum im Querschnitt 3 (Torten-)Segmente 2 aus einem ersten Kunststoffmaterial und zweite Segmente 3 aus einem zweiten Kunststoffmaterial. Dabei kann die Zusammensetzung gleich sein. Der Umfang der Faser 1 ist mit 5 bezeichnet. In der Fig. 3A sind insofern sechs Segmente angedeutet mit sechs äußeren Grenzlinien 6. Davon ist der Übersichtlichkeit halber nur eine mit Bezugszeichen versehen. Es ist auch möglich, Mehrkomponentenfasern mit einer anderen segmentweisen Aufteilung zu schaffen. Es können beispielsweise nebeneinander liegende Segmente geschaffen werden, sodass an der sich ergebenden Mantelfläche äußere Segmentgrenzen ergeben.

Die Fig. 3B zeigt eine Multikomponentenfaser 1' im Querschnitt mit vier Segmenten 2, 3. Bei der Herstellung werden beispielsweise vier Düsen in einem Spinnbalken derart zusammengefasst, dass sich Fasern mit einem entsprechenden Querschnitt bilden.

In der Fig. 3C ist noch eine weitere Mehrkomponentenfaser 1" im Querschnitt angedeutet. Die Mehrkomponentenfaser 1" hat acht Segmente 2, 3 und dementsprechend auch acht äußere Segmentgrenzen 6. Der Durchmesser der Faser ist mit D bezeichnet. Die Mehrkomponentenfaser 1" hat zum Beispiel einen Durchmesser von 10 µm. Bei bekannten Spinnvliesmaterialien werden die Segmente 2, 3 nach der Produktion der Endlosfilamente aufgesplittet, um kleinere bzw. dünnere Fasern zu erzeugen. Dies ist bei dem hier vorgeschlagenen Vliesmaterial nicht gewünscht und wird daher eher oder sogar so weit als möglich, vermieden. Bei dem in Fig. 1 gezeigten Vliesmaterial 10 behalten die Fasern ihre segmentierte Zusammensetzung, d. h. die Fasern sind im Wesentlichen ungesplittet.

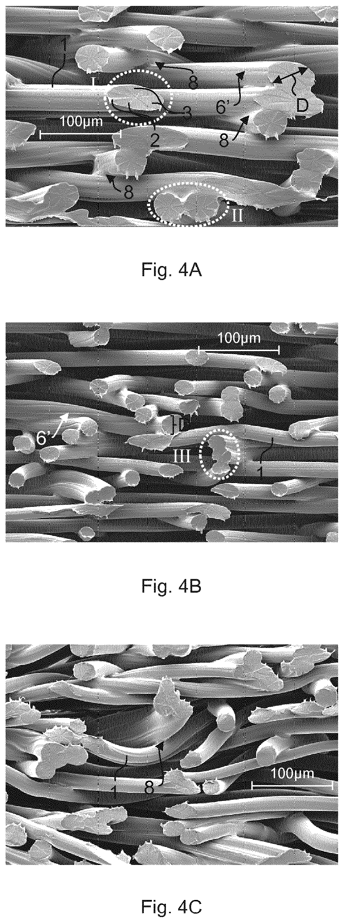

In den Fig. 4A bis 4C sind rasterelektronenmikroskopische Aufnahmen von Ausschnitten derartiger Spinnvliesmaterialien zum Einsatz als Filtermedium dargestellt. Die Kunststoffkomponenten der in Fig. 4 dargestellten Fasern im Bereich I sind beide aus einem thermoplastischen Polyolefin gebildet, das mit einem niedriger schmelzbaren Zusatz versehen ist. Man erkennt am Beispiel der Fig. 4A an der markierten Faser die Segmente 2, 3 im Querschnitt. Die Darstellung entspricht im Wesentlichen der schematischen Darstellung, wie sie in der Fig. 3C angedeutet ist, wobei hier die Segmente 2 kleiner sind als die Segmente 3. Insgesamt sind 16 Segmente in Fig. 4A vorhanden und sichtbar. Man erkennt entlang der Längserstreckung der jeweiligen Umfangsfläche Rillen 6' an den äußeren Segmentgrenzen 6 der Fasern 1. Der Durchmesser D der Faser liegt bei etwa 30 µm. Die in der Fig. 4A angedeuteten Fasern 1 sind zu einem Spinnvliesmaterial verfestigt. D. h. das Gespinst, welches im Spinnblasverfahren abgelegt wurde, ist thermisch derart behandelt, dass sich an den Grenzpunkten 8 oder Anlegeflächen zwischen separaten Fasern diese miteinander verschmolzen sind. Dies ist in der Fig. 4A mit den Pfeilen 8 angedeutet. Man erkennt insbesondere in dem unteren markierten Bereich II, wie die beiden aneinander liegenden Fasern bzw. Segmente aneinander verschmolzen sind.

Das zur Herstellung verwendete thermoplastische Polypropylenmaterial ist derart mit einem Zusatz, beispielsweise einem Polypropylen-Metallocen-Homopolymer, versehen, das einen niedrigeren Schmelzpunkt hat als das Basispropylen. Zum Beispiel kann das Polypropylen PPH 9099, erhältlich von Total Research & Technology, Feluy verwendet werden, das ein Homopolymer ist, und als Zusatz ein Polypropylen, welches unter dem Namen Lumicene MR 2001 vom selben Hersteller erhältlich ist. Zur Einstellung des Schmelzpunktes ist es auch denkbar, ein Polypropylen-Copolymer, beispielsweise Adflex Z 101 H, das von der Fa. LyondellBasell Industries Holdings B.V. erhältlich ist, zu verwenden.

Es ist möglich, an den Fasern dynamische Differenzkalorimetrische Untersuchungen durchzuführen, um beispielsweise zwei verschiedene Schmelzpunkte zu erkennen. Bei einer entsprechenden Untersuchung, die auch als DDK-Analyse oder DSC-Analyse (differential scanning calorimetry) bezeichnet wird, erfolgt eine thermische Analyse zur Messung von der abgegebenen oder aufgenommenen Wärmemenge einer Probe bei Aufheizung, Abkühlung oder einem isothermen Prozess. Die Probe ist Beispielsweise eine bestimmte Menge des Spinnvliesmaterials. Mit Hilfe von DDK-Analysen gemäß DIN EN ISO 11357-1 können mehrere Schmelzpunkte bzw. Schmelztemperaturen der Polymermischungen erkannt werden.

Dadurch, dass entsprechende thermoplastische Materialien als Kunststoffkomponenten eingesetzt werden, können Spinnvliesmaterialien, wie sie in den Fig. 4A bis 4C dargestellt sind, zunächst einfach gesponnen und anschließend verfestigt werden. Die Fig. 4B zeigt ein weiteres Spinnvlies als REM-(Rasterelektronenmikroskop-)Aufnahme. Der Durchmesser D der Fasern ist dabei geringer als in der Fig. 4a dargestellt ist, und beträgt etwa 10 bis 15 µm. In dem markierten Bereich III erkennt man, wie drei der Endlosfasern aneinanderhaften und dennoch vollständig ungesplittet sind. Durch die Materialauswahl und Herstellung wird erreicht, dass die Fasern möglichst ungesplittet vorliegen. Man erkennt in der Fig. 4B ebenfalls die sich als Rillen 6' abzeichnenden, längs der Fasern 1 verlaufenden äußeren Segmentgrenzen.

Die Fig. 4C zeigt einen weiteren Ausschnitt eines Vliesmaterials mit noch dünneren Multikomponentenfasern 1. Auch in der Fig. 4C sieht man, wie die Fasern 1 durch thermische Einwirkung miteinander verfestigt wurden. Das heißt, an der Grenzfläche zwischen den Fasern 1 sind die Materialien miteinander verschmolzen.

Im Vergleich zu Vliesmaterialien, die aus gesplitteten Multikomponentenfasern gebildet sind, haben die hier vorgeschlagenen Multikomponentenfasern eine relativ glatte Oberfläche. Allerdings entstehen beispielsweise durch die thermische Behandlung an den Mantelflächen Rillen durch den Materialübergang zwischen Segmenten. Entlang eines Umfangs 5 (vgl. Fig. C) einer entsprechenden Multikomponentenfaser 1 ergibt sich eine gewisse Rauheit durch die Rillen 6'. Dies ist in der Fig. 5 schematisch angedeutet.

In der Fig. 5 ist ein Diagramm gezeigt, in dem auf der x-Achse der Umfang U einer einzelnen Multikomponentenfaser angedeutet ist und auf der y-Achse der jeweilige Radius r. Der Radius r hat an den Stellen der äußeren Segmentgrenzen 6 Minima und weicht von dem Durchschnittsradius D/2 ab. Man kann insofern entlang eines jeweiligen Umfangs einer Faser eine Rauheit angeben.

Ein mögliches Maß für die Rauheit oder Glattheit der Mantelfläche entlang einer Umfangslinie ist die gemittelte Rautiefe Rz. Bei den untersuchten Multikomponentenfasern ist die gemittelte Rautiefe Rz geringer als 2 µm. Zum Beispiel kann die gemittelte Rautiefe Rz nach den ISO 4287/1 ermittelt werden. Als Messstrecke wird dabei zum Beispiel eine Umfangslinie einer Faser betrachtet. Der Umfang wird dann in sieben Einzelmessstrecken eingeteilt, wobei die mittleren fünf Messstrecken gleich groß gewählt sind. Bei jeder dieser Einzelmessstrecke wird auf dem Umfang des Profils die Differenz aus dem maximalen und minimalen Wert ermittelt.

### Teilaesplittete Mehrkomponentenfasern

In der Fig. 5 ergäbe sich durch die Minima und Maxima des Radius ein jeweiliges Minimum und Maximum. Für diese ermittelten Einzelrautiefen wird dann der Mittelwert gebildet. Diese gemittelte Rautiefe ist aufgrund der relativ glatten Oberfläche der Mantelfläche 7 bei den Multikomponentenfasern 1 eher gering. Die in dem als Filtermedium verwendbaren Spinnvliesmaterialien (vgl. Fig. 1) sind die Multikomponentenfasern bevorzugt ungesplittet und haben eine eher glatte Umfangslinie bzw. Mantelfläche.

Die bekannten Anwendungen von kreis- oder auch anders segmentierten Multikomponentenfasern erfordern ein Aufsplitten derselben in die Segmente, um kleinere Fasereinheiten zu erzielen. Dies erfolgt zum Beispiel durch einen Wasserstrahleinfluss. Man spricht auch von einer hydrodynamischen Vernadelung entsprechender Splittteilfasern. Üblicherweise werden dazu auch, wie in der US 2002/0013111 A1 ausgeführt ist, bestimmte Polymermaterialien für die verschiedenen Segmente verwendet, welche ein leichtes Splitten nach dem Spinnprozess ermöglichen. Bekannt sind zum Beispiel Polyestermaterialien mit aromatischen oder Polymilchsäureanteilen.

Untersuchungen der Anmelderin haben ergeben, dass thermoplastische Polymermaterialien, wie Polyolefine, und insbesondere Polypropylene, besonders gut geeignet sind, Multikomponentenfasern zu erzeugen, die wenig gesplittet sind und auch besonders widerstandsfähig gegenüber bekannten Splitverfahren sind. Man erkennt bereits in den Fig. 4A bis 4C, dass selbst im thermisch verfestigten Zustand die Mehrkomponentenfasern zusammenhängende Segmente haben. Vorzugsweise ist der Anteil von zum Teil gesplitteten Fasern nur gering.

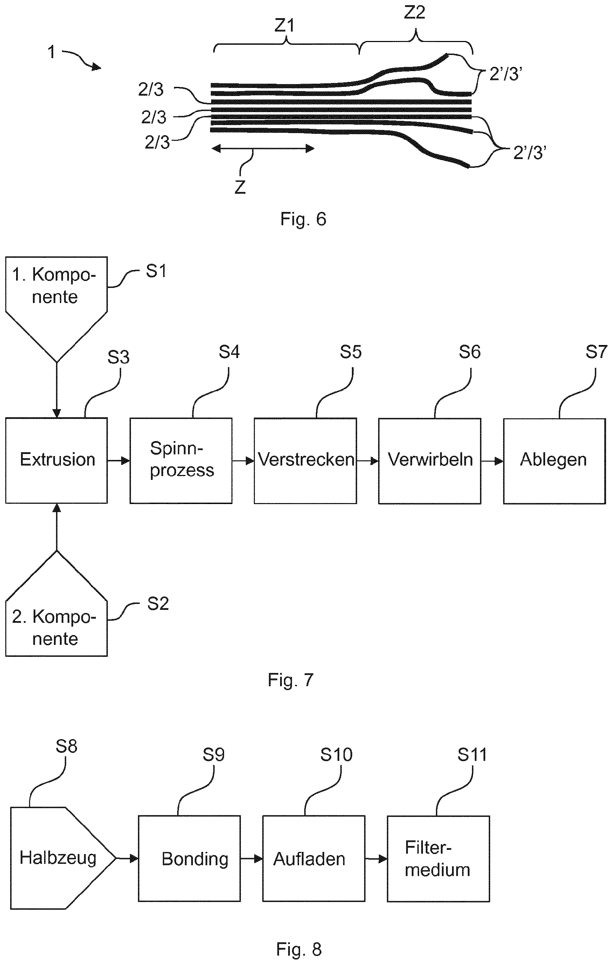

In der Fig. 6 ist beispielsweise eine Faser schematisch angedeutet. Die dunklen Kurven stellen aneinander liegende Segmente 2, 3 einer Mehrkomponentenfaser 1 dar. Die Längsausdehnung der Mehrkomponentenfaser 1 ist mit Z angedeutet. Man erkennt in einem Längenbereich Z1, dass die Segmente 2/3 aneinanderhaften und ungesplittet sind. Diese Segmente sind mit 2/3 angezeigt. Durch Einwirkungen während des Herstellungsprozesses oder auch bei der weiteren Verarbeitung der Vliesmaterialien können die Fasern grundsätzlich aufsplitten. Das heißt, es bilden sich einzelne Segmente, die losgelöst von den übrigen ausfransen. Dies ist in dem Abschnitt Z2 mit 2'/3' bezeichnet.

Am Beispiel der Fig. 6 kann als Maß für ein Aufsplitten einerseits oder für einen nicht gesplitteten Längenanteil einer Faser das Verhältnis zwischen dem Abschnitt Z1 und dem Abschnitt Z2 gewählt werden. Nimmt man an, dass die Gesamtlänge der untersuchten Faser Z1 + Z2 beträgt, ergibt sich ein Längenanteil der Mehrkomponentenfaser 1 von Z1/(Z1+Z2), bei dem die Segmente 2, 3 der Mehrkomponentenfaser nicht gesplittet oder voneinander getrennt sind. Bei dem Beispiel der Fig. 6 sieht man etwa 60 % Längenanteil ungesplittet. Im Umkehrschluss ist der Längenanteil der in der Fig. 6 angedeuteten Mehrkomponentenfaser 1, bei dem die Kreissegmente 2'/3' der Faser voneinander gesplittet ist, bei etwa 40 %. Bevorzugt werden Filtermedien, bei denen das Spinnvliesmaterial aus möglichst vielen ungesplitteten Mehrkomponentenfasern aufgebaut ist.

Eine entsprechende Bestimmung des Längenanteils einer oder mehrerer Mehrkomponentenfasern, die nicht gesplittet sind, kann beispielsweise durch eine Probe eines vorgegebenen Ausschnitts, beispielsweise 1 mm² oder 1 cm², des flächigen Spinnvliesmaterials erfolgen.

Eine alternative Möglichkeit der Bestimmung des Splitanteils in einem Spinnvliesmaterial aus Mehrkomponentenfasern kann der Anteil der Mehrkomponentenfasern in einer Probe sein, die ungesplittet sind. Beispielweise sind die in den Ausschnitten dargestellten Spinnvliesmaterialien in den Fig. 4A bis 4C praktisch vollständig aus nicht gesplitteten Mehrkomponentenfasern gebildet. Eine Mehrkomponentenfaser kann als gesplittet klassifiziert werden, wenn sich mehrere Segmente ablösen, wie dies beispielsweise in dem Längenbereich Z2 der Faser 1 aus Fig. 6 der Fall ist. Beispielsweise lassen sich in einem Volumen- oder Flächenabschnitt eines Spinnvliesmaterials der Anteil der Mehrkomponentenfasern zählen, die abgespaltene oder gesplittete Segmente aufweisen. Vorzugsweise ist dies nicht mehr als 50 %.

Je mehr ungesplittete Mehrkomponentenfasern in dem Spinnvliesmaterial auftreten, desto besser sind die Filtrationseigenschaften. Gewünscht ist ein möglichst hoher Anteil von Mehrkomponentenfasern, bei denen die Segmente entlang ihrer Segmentgrenzen in der Längenausdehnung miteinander verbunden sind.

### Schritte im Herstellungsverfahren des Spinnvliesmaterials

Die Fig. 7 und 8 zeigen schematisch Verfahrensschritte in einem Herstellungsverfahren für ein Filtermedium aus einem Spinnvliesmaterial. In der Fig. 7 sind dabei die Schritte dargestellt, um aus ersten und zweiten Kunststoffkomponenten ein Gespinst zu erzeugen, und in der Fig. 8 sind die Vorgänge zum Ausbilden eines verfestigten Filtermediums aus dem Gespinst angedeutet.

In einem ersten Schritt werden die Ausgangsmaterialien für die erste Kunststoffkomponente und die zweite Kunststoffkomponente bereitgestellt. Dies ist in der Fig. 7 durch die Verfahrensschritte S1 und S2 angedeutet. Bei dem im Folgenden angedeuteten Ausführungsbeispiel für ein Herstellungsverfahren haben die erste Komponente und die zweiten Komponente eine unterschiedliche Zusammensetzung. Zum Beispiel ist das Ausgangsmaterial der ersten Kunststoffkomponente ein thermoplastisches Polyolefin. Als geeignet hat sich insbesondere das von der Fa. TOTAL erhältliche Polypropylen PPH 9099 erwiesen. PPH 9099 ist ein Homopolymer-Polypropylen mit einem Schmelzpunkt von 165°C. Weitere Eigenschaften möglicher thermoplastischer Polyolefine AM, MB, MC sind in der vorliegenden Tabelle angegeben.

**Tabelle 1**

| | Name | Hersteller | Typ | Schmelzpunkt (ISO 3146) | Schmelzflussindex (ISO 1133) |
|---|---|---|---|---|---|
| MA | PPH 9099 | Total | ho-PP | 165 °C | 25g/10min |
| MB | Lumicene MR2001 | Total | m-PP | 151 °C | 25 g/10 min |
| MC | Adflex Z101H | LyondellBasell | co-PP | 142 °C | 27 g/10 min |

Das Ausgangsmaterial der zweiten Komponente ist so gewählt, dass es einen niedrigeren Schmelzpunkt hat. Dazu können beispielsweise mehrere Anteile von thermoplastischen Polyolefinen verwendet werden. Als geeignet hat sich eine Mischung aus einem von der Fa. TOTAL erhältlichen Polypropylen unter der Bezeichnungen Lumicene MR 2001, im Folgenden MR2001, erwiesen. Der Schmelzpunkt liegt bei 151°C. MR 2001 ist ein Metallocen-Homopolymer aus Polypropylen. Der zweiten Komponente kann ein weiteres Polypropylen hinzugefügt werden, wie z. B. das von LyondellBasell erhältliche Adflex Z 101 H, im Folgenden Adflex, mit einem Schmelzpunkt von 142°C. Der Massenanteil der Ausgangsmaterialien der ersten Komponente mit der zweiten Komponente ist zum Beispiel 70 % zu 30 %. Bei der ersten Komponente, die aus einem einzigen thermoplastischen Material besteht, zum Beispiel dem vorgenannten PPH 9099, kann man auch von einem Basismaterial sprechen.

Das Massenverhältnis zwischen dem Anteil von MR 2001 zu Adflex Z 101 H im Ausgangsmaterial der zweiten Komponente ist beispielsweise etwa 75 zu 25 %. Dabei können Ausgangsmaterialien durch Mischen entsprechender Granulate der thermoplastischen Materialien hergestellt werden.

Die Ausgangsmaterialien der ersten und zweiten Komponente werden in den Schritten S1 und S2 entsprechend dosiert und einer Extrusionseinrichtung im Schritt S3 zugeführt. Die geschmolzenen Ausgangsmaterialien werden mit Hilfe eines Extruders im Schritt S3 einem Spinnbalken mit entsprechenden Düsen zur Ausbildung der Segmentengeometrie zugeführt. Dabei können optional Filter und Pumpvorrichtungen im Strom des verflüssigten jeweiligen thermoplastischen Polymers vorliegen.

Im Schritt S4 wird ein Spinnvlies oder Spinnblasprozess durchgeführt, bei dem aus den Düsen Endlosfilamente mit den kreissegmentierten Strukturen entstehen. Man erhält aus dem Spinnprozess im Schritt S4 kreissegmentierte Filamente aus der ersten und zweiten Kunststoffkomponente. Durch eine Luftstromeinwirkung werden die Filamente verstreckt und verwirbelt und anschließend insbesondere auf einem Siebband abgelegt. Dies ist in den Verfahrensschritten S5, S6 und S7 angedeutet.

Das Verstrecken S5 erfolgt durch eine geeignete Primärluftzufuhr, und das Verwirbeln S6 im Herstellungsprozess nachgelagert durch Sekundärluft. Es entsteht dadurch beim Ablegen S7 ein Gespinst aus den segmentierten Filamenten, die auch als Mehrkomponentenfilamente bezeichnet werden können. Das erhaltene Gespinst hat dann eine Dicke zwischen 1 und 2 mm.

In einem optionalen Schritt ist es möglich, das Gespinst thermisch vorzuverfestigen, indem die Filamente einerseits durch das Ablagesieb oder Siebband abgesaugt wird, und andererseits mit Hilfe beispielsweise heißer Luft oder anderer thermischer Einwirkung verfestigt bzw. vorverfestigt wird. Man kann dieses Gespinst als ein Halbzeug bezeichnen, das bereits Spinnvliesmaterialeigenschaften hat. Prinzipiell kann dieses Halbzeug bereits zur Filterung von Fluiden eingesetzt werden.

Um eine noch bessere, auch mechanische Eigenschaft des Spinnvliesmaterials aus kreissegmentierten Multikomponentenfilamenten zu erzielen, erfolgt eine weitere Verfestigung. Dies ist in der Fig. 8 schematisch angedeutet. Das vorverfestigte Gespinst wird in einem Bonding- oder Verfestigungsschritt S9 zwischen beabstandete Siebbänder, Rollen oder Walzen geführt und gleichzeitig einer Temperatur ausgesetzt, die höher ist als die Schmelztemperatur wenigstens einer der beiden Kunststoffkomponenten.

Zum Beispiel kann beim Einsatz der zuvor in der Tabelle aufgeführten Polypropylenmaterialien ein thermisches Bonding bei Temperaturen zwischen 150 und 158°C erfolgen. Das thermisch verfestigte Spinnvliesmaterial hat dann beispielsweise eine Dicke zwischen 0,5 und 1,5 mm. Die Dicke kann durch die Beabstandung der Siebbänder oder beheizbaren Rollen oder Walzen eingestellt werden.

Bei dem vorgeschlagenen Herstellungsverfahren werden insbesondere keine Vorrichtungen zum hydrodynamischen Verfestigen, zum Vernadeln oder zum chemischen Verfestigen oder Bonding eingesetzt. Dadurch wird der Anteil von gesplitteten Mehrkomponentenfasern in dem Spinnvliesmaterial reduziert.

In einem anschließenden Schritt S10 wird das verfestigte Spinnvliesmaterial aufgeladen. Das Aufladen erfolgt beispielsweise mit Hilfe von Draht- oder Stabelektroden, die gegenüber Laufrollen, über die das flächige und aufrollbare Spinnvliesmaterial geführt wird. Dazu kann insbesondere eine Vorrichtung und ein Aufladeverfahren eingesetzt werden, wie es in der US 5,401,446 erläutert ist. Auf die US 5,401,446 wird hiermit vollinhaltlich Bezug genommen ("incorporation by reference"). Untersuchungen der Anmelderin haben ergeben, dass insbesondere eine stufige Aufladung, wie es beispielsweise in der Fig. 1 der US 5,401,446 dargestellt ist, mit Hilfe von zwei nacheinander geschalteten Ladungstrommeln und Ladeelektroden günstig ist.

Anschließend wird das erhaltene geladene Spinnvliesmaterial als Filtermedium beispielsweise in Rollenform bereitgestellt (Schritt S11). Über den gesamten Herstellungsweg des Spinnvliesverfahrens verbleiben die Mehrkomponentenfasern ungesplittet bzw. weitestgehend ungesplittet. Beim thermischen Verfestigen im Schritt S9 wird beispielsweise ausschließlich ein Teil des thermoplastischen Materials aus den Ausgangsmaterialien angeschmolzen und führt zur Verbindung verschiedener Mehrkomponentenfasern untereinander.

Das flächige Filtermedium aus einem einlagigen Spinnvliesmaterial ist nun insbesondere in Rollenform bereitgestellt. Aus dem flächigen Material lassen sich aufgrund der Filtrationseigenschaften, aber auch der mechanischen Handhabbarkeit hinsichtlich seiner Biegesteifigkeit hochwertige Filtermedien erzielen.

### Vergleich der mechanischen Eigenschaften des Filtermediums mit Veraleichsvliesen

Die Anmelderin hat Vergleichsuntersuchungen, beispielsweise der Biegesteifigkeit von Spinnvliesmaterialien, die nach dem vorgeschlagenen Verfahren hergestellt sind, mit Materialien, die in handelsüblichen Filterelementen verarbeitet sind, durchgeführt. Es wurde dabei ein vom Hersteller MANN+HUMMEL GmbH vertriebenes Filterelement vom Typ CU 3054 untersucht. In der folgenden Tabelle sind die Biegesteifigkeiten eines Testvlieses mit denen von Vergleichsvliesen gegenübergestellt. Handelsübliche Filterelemente werden zum Teil mit Filtermedium von verschiedenen Herstellern gefertigt. Die Vergleichsvliese 1, 2 und 3 basieren auf kommerziell erhältliche Filtermedien für Innenraumfilter.

**Tabelle 2**

| Probe | Typ | Biegesteifigkeit nach DIN 53121 | | |
|---|---|---|---|---|
| | | Vorderseite | Rückseite | Mittel |
| Testvlies 1 | Spinnvlies | 210 mN | 219 mN | 214,5 mN |
| Vergleichsvlies 1 | Meltblown | 157 Mn | 165 mN | 161 mN |
| Vergleichsvlies 2 | Meltblown | 149 mN | 149 mN | 149 mN |
| Vergleichsvlies 3 | 2-lagig | 63 mN | 51 mN | 57 mN |

Bei dem Testvlies 1 wurde zwei Kunststoffkomponenten verwendet. Es wurden hierbei drei thermoplastische Materialien MA, MB und MC verwendet, wobei MA PPH 9099, MB MR2001 und MC Adflex gewählt wurde. Die erste Kunststoffkomponente umfasst im Wesentlichen MA. Die Zweite Kunststoffkomponente umfasst im Wesentlichen eine Mischung von MB und MC im Verhältnis 3:1. Insgesamt ist das Massenverhältnis in der Faser: MA: 70 %, MB: 22,5 % und MC: 7,5 %. Es wurde ein Spinnvlies der Grammatur bzw. einem Flächengewicht von 100 g/m² mit Hilfe einer von der Firma Reifenhäuser Reicofil erhältlichen Anlage als Testvlies 1 hergestellt und untersucht. Die Dicke des Spinnvliesmaterials betrug 1,14 mm bei einer Grammatur von 106 g/m². Die Messungen erfolgten dabei nach DIN 29076-2 bzw. DIN 29073-1. Es waren sechzehn Kreissegmente in den Fasern vorhanden.

Das Vergleichsvlies 1 kann für ein handelsübliches Filterelement CU3054 des Herstellers MANN+HUMMEL GmbH verwendet werden und ist aus einem Polypropylen mit einem Flächengewicht von 125 g/m² und hat eine Dicke von 1,25 mm.

Das Vergleichsvlies 2 kann für ein handelsübliches Filterelement CU3054 des Herstellers MANN+HUMMEL GmbH verwendet werden und ist aus einem Polypropylen mit einem Flächengewicht von etwa 146,5 g/m² und hat eine Dicke von etwa 1,15 mm.

Das Vergleichsvlies 3 kann für ein handelsübliches Filterelement CU3054 des Herstellers MANN+HUMMEL GmbH verwendet werden und ist aus einem zweilagigen Polyester/PolypropylenMaterial mit einem Flächengewicht von etwa 105 g/m² und hat eine Dicke von 0,6 mm gefertigt. Die Trägerlage aus Polyester ist mit einem Meltblownlage aus Polypropylen versehen.

Man erkennt, dass gegenüber den konventionellen Vergleichsmedien, die entweder auf Spinnblasfliesen oder mehrlagigen Materialien beruhen, eine verbesserte Biegesteifigkeit haben. Dies ermöglicht eine besonders gute Weiterverarbeitung, beispielsweise in Filterelementen aus zickzackförmig gefalteten Filtermedien.

### Mögliche Zusatzausstattungen von Filtermedien

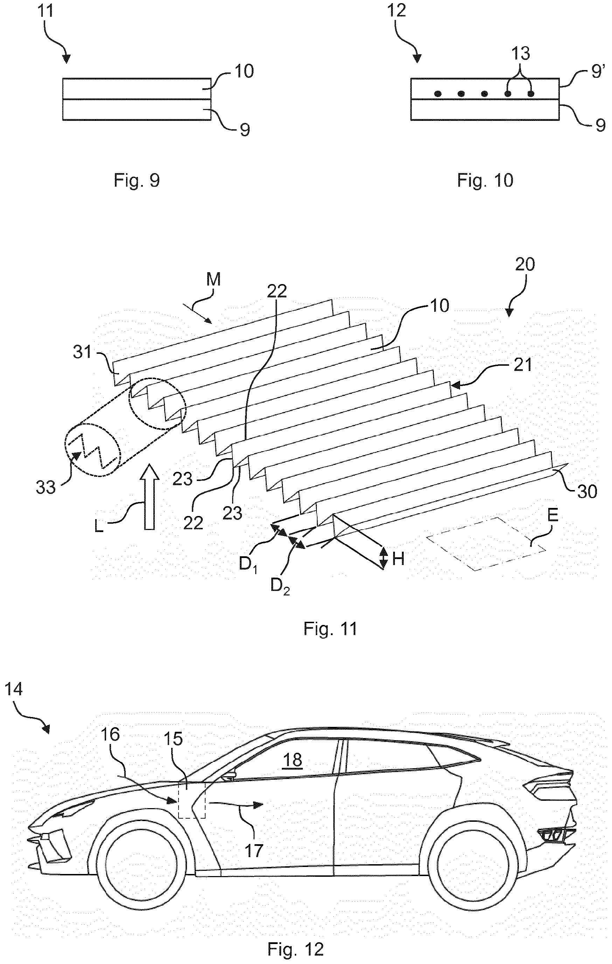

In der Fig. 9 ist eine weitere Ausführungsform für ein Filtermedium 11 angedeutet. Die Ausführungsform umfasst eine erste Filterlage 9, beispielsweise aus einem Meltblown- oder Schmelzblasmaterial, auf das ein Spinnvliesmaterial 10 aufgebracht ist, das im Wesentlichen aus ungesplitteten Mehrkomponentenfasern aufgebaut ist.

Um die Filtrationseigenschaften weiter zu verbessern oder zu verändern, ist es, wie es in der Fig. 10 angedeutet ist, möglich, Adsorberpartikel 13 in oder zwischen Lagen von Filtermedien einzubetten. Zum Beispiel hat das Filtermedium 12 eine erste Lage aus einem Meltblown-Material 9 und eine zweite Lage aus dem beschriebenen Spinnvliesmaterial 9'. Dazwischen sind zum Beispiel Adsorberpartikel 13 aus Aktivkohle oder anderen Adsorbermitteln eingebettet. Dadurch können beispielsweise flüchtige Kohlenwasserstoff zusätzlich zur Partikelfilterung beim Durchtreten des Filtermediums 12 zurückgehalten werden.

### Filtrationseigenschaften von Filtermedien

Die Anmelderin hat weitere Testvliese produziert und deren Eigenschaften untersucht. In der folgenden Tabelle 3 sind Dicken, die Luftdurchlässigkeit, das Flächengewicht und die Biegesteifigkeit für Testvliese 1 bis 4 aufgeführt.

**Tabelle 3**

| Probe | Dicke (DIN 29076-2) | Luftdurchlässigkeit (DIN 9237) | Flächengewicht (DIN 29073-1) |
|---|---|---|---|
| Testvlies 2 | 0,86 mm | 4500 l/m²s | 88 g/m² |
| Testvlies 3 | 0,90 mm | 2323 l/m²s | 90 g/m² |
| Testvlies 1 | 1,14 mm | 1809 l/m²s | 106 g/m² |
| Testvlies 4 | 1,18 mm | 1705 l/m²s | 124 g/m² |

Bei den Testvliesen 2, 3 und 4 wurde dasselbe Ausgangsmaterial wie für das Testvlies 1 für die beiden Kunststoffkomponenten der Segmente verwendet.

In der Tabelle 4 sind Filtrationseigenschaften der Testvliese aufgeführt.

**Tabelle 4**

| Probe | NaCl-Abscheideeffizienz bei 0,3 µm (DIN 71640-1) | ISO A2 Anfangsabscheidegrad bei 1 µm (DIN 71460-1) | ISO A2 Anfangsabscheidegrad bei 5 µm (DIN 71460-1) | ISO A2 Staubrückhaltevermögen bei 50 Pa (DIN 71460-1) |
|---|---|---|---|---|
| Testvlies 2 | 24% | 80% | 87% | 65 g/m² |
| Testvlies 3 | 43% | 88% | 95% | 34 g/m² |
| Testvlies 1 | 47,3 % | 94,4 % | 97,5 % | 36,2 g/m² |
| Testvlies 4 | 52% | 93% | 98% | 34 g/m² |

### Gefaltete Filtermedien und Filterelemente

In der folgenden Fig. 11 ist ein zickzackförmig gefaltetes Medium als Faltenpack 20 dargestellt. Das Filtermedium 10 hat dementsprechend Falten 21, welche sich typischerweise quer zur Maschinenrichtung M erstrecken. Das gefaltete Filtermedium wird auch als Faltenpack 20 oder Plissee bezeichnet. Die Falten 21 können mittels Faltens entlang scharfer Faltkanten 22 (auch als Faltenspitzen bezeichnet) oder durch eine wellenförmige Ausführung des Filtermediums 10 erzeugt werden. Eine jeweilige Falte 21 kann durch zwei Faltabschnitte 23 definiert sein, welche über eine entsprechende Faltkante 22 miteinander verbunden sind. Gemäß dem Ausführungsbeispiel weisen die Faltkanten 22 in bzw. entgegen der Anströmrichtung, welche in Fig. 11 durch den Pfeil L kenntlich gemacht ist.

Auch eine Faltung, bei welcher die Falten 21 eine variierende Höhe H aufweisen, ist möglich. Ferner kann der Faltenabstand zwischen den Falten 21 variieren, sodass die Distanz D₁ ungleich der Distanz D₂ ist. Das Faltenpack 20 kann selbsttragend ausgeführt sein, d. h. die Falten 21 sind bei einer bestimmungsgemäßen Durchströmung im Filterbetrieb formstabil.

Das eingesetzte Filtermedium 10 wird in Maschinenrichtung M von Endfalten 30, 31 begrenzt. Quer dazu wird das Filtermedium 10 von Faltenstirnkanten 19, 20 (auch als Faltenprofile 33 bezeichnet) begrenzt. Mit "Faltenstirnkante" ist die stirnseitige Faltenfläche gemeint, welche sich zwischen benachbarten Faltkanten 33 einer jeweiligen Falte 22 erstreckt.

Das Filtermedium 10 kann in der Draufsicht, also in der Ebene E seiner flächigen Erstreckung, eine rechteckige Gestalt aufweisen. Allerdings ist auch eine dreieckige, fünf- oder mehreckige, runde oder ovale Gestalt denkbar.

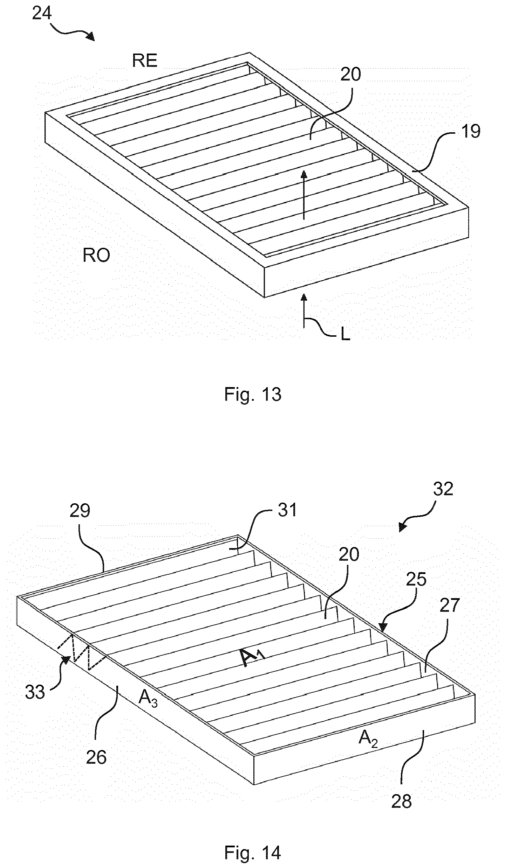

Ein möglicher Anwendungsfall ist die Verwendung des jeweiligen Filtermediums in Innenraumluftfiltern für Kraftfahrzeuge. Fig. 12 zeigt ein Kraftfahrzeug 14 mit einer Klimaanlage 15, welche als Heiz-Klimaanlage ausgebildet sein kann. Die Klimaanlage 15 nimmt Außenluft 16 auf und führt gefilterte Luft 17 einer Kabine 18 (auch als Fahrgastraum bezeichnet) des Kraftfahrzeugs 14 zu. Zu diesem Zweck umfasst die Klimaanlage 15 eine in Fig. 13 gezeigte Filteranordnung.

Die Filteranordnung 24 umfasst ein Filtergehäuse 19 mit einem darin insbesondere austauschbar aufgenommenem Innenraumfilter 32. Der Innenraumfilter 32 ist in Fig. 14 näher gezeigt. Der Innenraumfilter 32 weist ein zu einem Faltenpack 20 gefaltetes Filtermedium (vgl. Fig. 11) auf, welches insbesondere ringsum mit einem Rahmen 25 verbunden ist. Der Rahmen 25 kann beispielsweise Seitenbänder 26, 27 und Kopfbänder 28, 29 umfassen.

Die in Fig. 14 gezeigten Seitenbänder 26, 27 sind mit den Faltenstirnkanten 33 die Kopfbänder 28, 29 mit den Endfalten 30, 31 verbunden, insbesondere durch Verschmelzen, Verscheißen oder Verkleben. Die Seitenbänder 26, 27 sowie die Kopfbänder 28, 29 können den Rahmen 19 einstückig oder mehrteilig ausbilden. Die Seitenbänder 26, 27 sowie die Kopfbänder 28, 29 können beispielsweise aus einem insbesondere flexiblen Fasermaterial oder als insbesondere steife Kunststoffspritzgussbauteile hergestellt sein. Insbesondere kann der Rahmen 19 durch Anspritzen an das Faltenpack 20 erzeugt sein.

Im Filterbetrieb wird das Filtermedium 10, wie in Fig. 11 oder 13 gezeigt, senkrecht zu seiner flächigen Erstreckung von Luft L durchströmt. Die Luft L strömt dabei von einer Rohseite RO des Innenraumfilters 8 hin zu einer Reinseite RE desselben.

Um eine ausreichende Abdichtung zwischen der Roh- und Reinseite RO, RE zu gewährleisten, kann eine Dichtung zwischen dem Innenraumfilter 32 und dem Filtergehäuse 19 vorgesehen sein. Die Dichtung kann beispielsweise in den Rahmen 25 integriert sein. In diesem Fall ist der Rahmen 25 zumindest teilweise aus einem dichtenden Material ausgebildet. Alternativ kann die Dichtung als Zusatzteil vorgesehen, beispielsweise an dem Rahmen 25 befestigt, insbesondere angespritzt sein.

Das in der Fig. 14 wiedergegebene Filterelement 32 umschließt ein quaderförmiges Volumen mit den Begrenzungsflächen A₁, A₂, A₃. Die größte Begrenzungsfläche A₁ entspricht der Abström- oder Anströmseite des Filterelements 32.

### Filtrationseigenschaften des Faltenpacks

Die Anmelderin hat Vergleichsuntersuchungen durchgeführt, bei der Filterelemente nach dem Stand der Technik, namentlich Innenraumluft-Filterelemente vom Typ CU 3054 des Herstellers MANN+HUMMEL GmbH, mit geometrisch gleich aufgebauten Filterelementen verglichen wurden. Die Vergleichs- und Testfilterelemente haben eine Form wie es in der Fig. 14 wiedergegeben ist. Die Testfilterelemente sind dabei mit einem jeweiligen nach dem hier vorgeschlagenen Verfahren hergestellten Spinnvliesmaterial aus Mehrkomponentenfasern ausgestattet. Die Spinnvliese wurden verfestigt und einer Aufladung unterzogen. Dazu sind drei Elektrodenanordnungen mit jeweils einer Spannung zwischen Elektrode und Wickelrolle von 25 - 35 kV eingesetzt worden. Der Abstand zum Spinnvlies betrug etwa 20 bis 40 mm, und die Laufgeschwindigkeit entlang der Elektrodenanordnungen lag zwischen 30 und 40 m/min. Das flache als Rollenware vorliegende Spinnvlies wurde dann der Zickzackfaltung unterzogen und mit den CU 3054 gemäßen Seiten- und Kopfbändern versehen.

Das jeweils untersuchte Filterelement hat eine Längenausdehnung von 292 ± 1,5 mm, eine Breite von 198,5 ± 1 mm und eine Höhe von 30 ± 1 mm. Dadurch ergeben sich Faltenhöhen H = 28 mm bei insgesamt 42 Falten in dem sich ergebenden Faltenpack. Der Faltenabstand D₁ = D₂ beträgt 7 mm. Die Filterfläche ergibt sich dadurch zu 0,466 m² bei einer Deckfläche A₁ des Filterelementes von 0,058 m² (vgl. Fig. 9, 14). Die handelsüblichen Filterelemente sind mit unterschiedlichen Rückhaltevermögen erhältlich. Bei den handelsüblichen Vergleichsfilterelementen wird ein Filtermedium eingesetzt, aus einem Meltblown-Vlies. Alternativ kann ein zweilagiges Material aus Polyester und Polypropylen mit hohem Rückhaltevermögen eingesetzt werden.

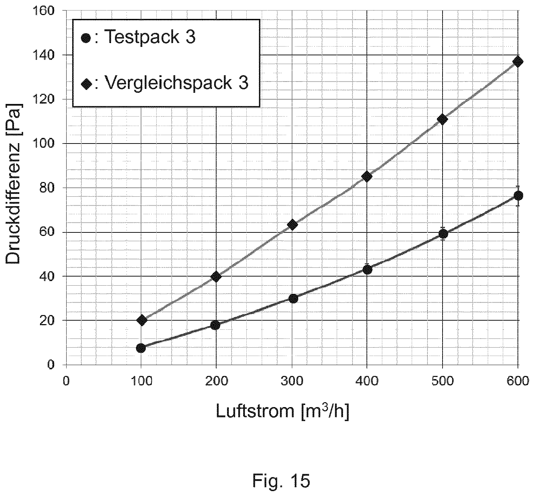

Die Fig. 15 zeigt Kurven aus Druckabfallmessungen eines Testpacks 3 für den Filtergrad D und eines handelsüblichen Filterelements CU 3054 mit konventionellem Filtermedium. Über den gesamten Volumenstrombereich von 100 bis 600 m³/min liefert das Filterelement mit einem Faltenpack aus Mehrkomponenten-Spinnvliesfasern, die im wesentlichen ungesplitted im Filterelement vorliegen (Testpack 3), bessere Ergebnisse als das Filtermedium nach dem Stand der Technik (Vergleichspack 3).

Aus der folgenden Tabelle ergibt sich, dass die vorgeschlagenen einlagigen Spinnvliesmaterialien aus Propylenmischungen zu verbesserten Abscheidegraden und verbesserten Druckabfällen führt. Alle Messungen erfolgten gemäß DIN 71460-1.

**Tabelle 5**

| Probe | Druckabfall bei 600 m³/h | NaCl-Abscheideeffizienz bei 0,3 µm | ISO A2 Anfangsabscheidegrad bei 1 µm | ISO A2 Anfangs abscheidegrad bei 5 µm |
|---|---|---|---|---|
| Vergleichspack 1 | 39 Pa | 12% | 46% | 66% |
| Testpack 1 | 36 Pa | 24% | 79% | 86% |
| Vergleichspack 2 | 58 Pa | 20 % | 69 % | 94 % |
| Testpack 2 | 55 Pa | 39% | 92% | 96% |
| Vergleichspack 3 | 137 Pa | 54% | 95% | 99% |
| Testpack 3 | 77 pa | 49% | 95% | 98% |

Insofern ist ein aus dem vorgeschlagenen Spinnvliesmaterial gefertigtes Filterelement den bekannten Filterelementmaterialien überlegen. Dies gilt insbesondere in Bezug auf die Biegesteifigkeit des Filtermediums, das Rückhaltevermögen und die Staubspeicherkapazität. Je höher die Anforderungen an Filtermedien und Filterelemente sind, desto besser sind die vorgeschlagenen Spinnvliese mir ungesplitteten Mehrkomponentenfasern geeignet.

### Verwendete Bezugszeichen:

- 1: Mehrkomponentenfaser
- 2, 3: Segmente/Kunststoffkomponente
- 4: innere Segmentgrenze
- 5: Umfang
- 6: äußere Segmentgrenze
- 6': Längsrille
- 7: Mantelfläche
- 8: Verbindungsstelle
- 9: Schmelzblasmaterial
- 10: Spinnvliesmaterial
- 11: Filtermedium
- 12: Filtermedium
- 13: Adsorberpartikel
- 14: Kraftfahrzeug
- 15: Klimaanlage
- 16: Außenluft
- 17: gefilterte Luft
- 18: Innenraum
- 19: Filtergehäuse
- 20: Faltenpack
- 21: Falte
- 22: Faltkante
- 23: Faltabschnitt
- 24: Filteranordnung
- 25: Rahmen
- 26: Seitenband
- 27: Seitenband
- 28: Kopfband
- 29: Kopfband
- 30: Endfalte
- 31: Endfalte
- 32: Innenraumluftfilter
- 33: Faltprofil

- D₁, D₂: Faltabstand
- A₁, A₂, A₃: Begrenzungsfläche
- E: Ebene
- H: Falthöhe
- L: Luftströmung
- M: Maschinenrichtung
- U: Umfang
- D: Durchmesser
- Z: Längenausdehnung

- RO: Rohluftbereich
- RE: Reinluftbereich

## Patentansprüche

1. Spinnvliesmaterial, welches zumindest teilweise aus kreissegmentierten Mehrkomponentenfasern (1) mit mindestens einer ersten Kunststoffkomponente (2) und einer zweiten Kunststoffkomponente (3) gebildet ist, wobei die Mehrkomponentenfasern (1) einen kreisförmigen Querschnitt aufweisen, und wobei ein Anteil von Mehrkomponentenfasern (1), bei denen Kreissegmente (2, 3) an inneren Segmentgrenzen (4) der Mehrkomponentenfasern (1) entlang ihrer Längenausdehnung (L) miteinander verbunden sind, mindestens 70 %, bevorzugt mindestens 80 % beträgt, und wobei das Spinnvliesmaterial thermisch verfestigt ist, wobei bei einem Längenanteil der Mehrkomponentenfasern (1) von maximal 50 %, bevorzugt maximal 30 %, weiter bevorzugt maximal 20 % die Kreissegmente (2, 3) der Mehrkomponentenfasern (1) voneinander gesplittet sind, und wobei die erste Kunststoffkomponente (2) und die zweite Kunststoffkomponente (3) aus einem Polypropylen bestehen.

2. Spinnvliesmaterial nach Anspruch 1, wobei eine jeweilige kreissegmentierte Mehrkomponentenfaser (1) eine Mantelfläche (7) hat, und die Kunststoffkomponenten (2, 3) an den Mantelflächen (7) der Mehrkomponentenfasern (1) aneinander grenzen.

3. Spinnvliesmaterial nach Anspruch 2, wobei die Mantelfläche (7) entlang von Grenzflächen (6) zwischen den Kunststoffkomponenten (2, 3) Längsrillen (6') aufweist.

4. Spinnvliesmaterial nach einem der Ansprüche 1 bis 3, wobei das Spinnvliesmaterial (10) eine Dicke (D)
- zwischen 1,0 mm und 2,0 mm, bevorzugt zwischen 1,2 mm und 1,8 mm, weiter bevorzugt zwischen 1,3 mm und 1,7 mm, hat oder zwischen 0,5 mm und 1,5 mm, bevorzugt zwischen 0,7 mm und 1,3 mm, weiter bevorzugt zwischen 0,8 mm und 1,2 mm, hat.

5. Spinnvliesmaterial nach einem der Ansprüche 1 bis 4, wobei die Kunststoffkomponenten (2, 3) der Mehrkomponentenfasern (1) als Elektrete aufgeladen sind.

6. Spinnvliesmaterial nach einem der Ansprüche 1 bis 5, wobei das Spinnvliesmaterial (10) ein Flächengewicht zwischen 80 g/m² und 160 g/m², bevorzugt zwischen 90 g/m² und 110 g/m², zwischen 80 g/m² und 100 g/m², oder zwischen 110 g/m² und 130 g/m² hat.

7. Spinnvliesmaterial nach einem der Ansprüche 1 bis 6, wobei die erste Kunststoffkomponente (2) einen ersten Schmelzpunkt (T₂) und die zweite Kunststoffkomponente (3) einen zweiten Schmelzpunkt (T₃) aufweist, wobei der erste Schmelzpunkt (T₂) höher ist als der zweite Schmelzpunkt (T₃) und zwischen dem ersten und dem zweiten Schmelzpunkt (T₂, T₃) ein Unterschied von mindestens 8 K, bevorzugt mindestens 10 K und weiter bevorzugt mindestens 15 K ist.

8. Spinnvliesmaterial nach einem der Ansprüche 1 bis 7, wobei der Massenanteil der ersten Kunststoffkomponente zwischen 20 % und 80 %, bevorzugt zwischen 40 % und 60 %, weiter bevorzugt zwischen 45 % und 55 % liegt.

9. Spinnvliesmaterial nach einem der Ansprüche 1 bis 8, wobei die erste Kunststoffkomponente (2) und/oder die zweite Kunststoffkomponente (3) einen ersten Anteil eines ersten thermoplastischen Materials (MA) mit einem ersten Schmelzpunkt (T_{A}) und einen zweiten Anteil eines zweiten thermoplastischen Materials (MB) mit einem zweiten Schmelzpunkt (T_{B}) aufweist, wobei der erste Schmelzpunkt (T_{A}) höher ist als der zweite Schmelzpunkt (T_{B}).

10. Spinnvliesmaterial nach Anspruch 9, wobei das zweite thermoplastische Material (MB) von unterschiedlichen Mehrkomponentenfasern (1) zur Verfestigung des Spinnvliesmaterials (10) miteinander teilweise verschmolzen ist.

11. Spinnvliesmaterial nach Anspruch 9 oder 10, wobei das erste thermoplastische Material (MA) ein Polypropylen-Homopolymer ist und/oder das zweite thermoplastische Material (MB) ein Metallocen-Polypropylen ist.

12. Spinnvliesmaterial nach einem der Ansprüche 9 bis 11, wobei der Massenanteil des ersten thermoplastischen Materials (MA) zwischen 40 % und 60 %, bevorzugt zwischen 70 % und 80 %, weiter bevorzugt zwischen 85 % und 95 % liegt.

13. Spinnvliesmaterial nach einem der Ansprüche 1 bis 12, wobei das Spinnvliesmaterial (10) eine Luftdurchlässigkeit zwischen 1.300 l/m²s und 1.700 l/m²s, bevorzugt zwischen 1.400 l/m²s und 1.500 l/m²s, weiter bevorzugt zwischen 2.000 l/m²s und 2.600 l/m²s, und noch weiter bevorzugt zwischen 3.500 l/m²s und 4.500 l/m²s aufweist.

14. Spinnvliesmaterial nach einem der Ansprüche 1 bis 13, wobei das Spinnvliesmaterial (1) eine Maschinenrichtung (M) hat, und die Mehrkomponentenfasern (1) entlang der Maschinenrichtung (M) orientiert sind, wobei bevorzugt das Spinnvliesmaterial (10) eine Biegesteifigkeit in Maschinenrichtung (M) von mehr als 170 mN, bevorzugt von mehr als 180 mN, weiter bevorzugt von mehr als 200 mN aufweist.

15. Gegenstand umfassend ein Spinnvliesmaterial nach einem der Ansprüche 1 bis 14.

16. Gegenstand nach Anspruch 15, **dadurch gekennzeichnet, dass** der Gegenstand ein Isoliermaterial, insbesondere für die Gebäudeisolierung, Kraftfahrzeuge, Hausgeräte, Getränkeverpackungen, und/oder ein Verpackungsmaterial und/oder eine Leichtbaukonstruktion, bei der das Spinnvliesmaterial als ein in den Kraftfluss eingebettetes Element vorgesehen ist, ist.

17. Gegenstand nach Anspruch 16, **dadurch gekennzeichnet, dass** der Gegenstand ein Filtermedium (11) ist, das bevorzugt ferner ein Schmelzblasmaterial (9) umfasst.

18. Filterelement umfassend ein Spinnvliesmaterial nach zumindest einem der Ansprüche 1 bis 14 und/oder ein Filtermedium nach Anspruch 17.

19. Filterelement nach Anspruch 18, wobei das Filterelement eine Adsorbensschicht umfasst.

20. Filterelement (32) nach Anspruch 18 oder 19, mit einem Filtermedium nach Anspruch 17, welches zu einem Faltenpack (20) zickzackförmig gefaltet.

21. Filterelement nach einem der Ansprüche 18 bis 20, wobei das Filterelement (32) ein Innenraumluftfilterelement für ein Kraftfahrzeug (14) ist.

22. Verwendung eines Filtermediums (10) nach Anspruch 17 oder eines Filterelements (32) nach einem der Ansprüche 18 bis 21 zum Filtern eines mit Partikeln beladenen Gasstroms.

23. Verwendung eines Filtermediums (10) nach Anspruch 17 in einem Innenraumluftfilter für ein Kraftfahrzeug (14).

## Claims

1. Spunbonded fabric material which is at least partially formed by cercle-segmented multicomponent fibers (1) having at least a first plastic component (2) and a second plastic component (3), wherein the multicomponent fibers (1) feature a circular cross section, and wherein a proportion of multicomponent fibers (1) in which the circle segments (2, 3) are connected to one another at inner segment limits (4) of the multicomponent fibers (1) along their length extension (L) amounts to at least 70 %, preferably at least to 80 %, and wherein the spunbonded fabric material is thermally solidified, wherein with a longitudinal proportion of the multicomponent fibers (1) of at most 50 %, preferably at most 30 %, further preferably at most 20 %, the circle segments (2, 3) of the multicomponent fibers (1) are split from one another, and wherein the first plastic component (2) and the second plastic component (3) consist of a polypropylene.

2. Spunbonded fabric material according to claim 1, wherein a respective cercle-segmented multicomponent fiber (1) has a circumferential surface (7), and the plastic components (2, 3) adjoin each other at the circumferential surfaces (7) of the multicomponent fibers (1).

3. Spunbonded fabric material according to claim 2, wherein the circumferential surface (7) features along boundary surfaces (6) longitudinal grooves (6') between the plastic components (2, 3).

4. Spunbonded fabric material according to one of the claims 1 to 3, wherein the spunbonded fabric material (10) has a thickness (D)
- between 1.0 mm and 2.0 mm, preferably between 1.2 mm and 1.8 mm, further preferably between 1.3 mm and 1.7 mm, or
- between 0.5 mm and 1.5 mm, preferably between 0.7 mm and 1.3 mm, further preferably between 0.8 mm and 1.2 mm.

5. Spunbonded fabric material according to one of the claims 1 to 4, wherein the plastic components (2, 3) of the multicomponent fibers (1) are charged as electrets.

6. Spunbonded fabric material according to one of the claims 1 to 5, wherein the spunbonded fabric material (10) has a grammage between 80 g/m² and 160 g/m², preferably between 90 g/m² and 110 g/m², between 80 g/m² and 100 g/m², or between 110 g/m² and 130 g/m².

7. Spunbonded fabric material according to one of the claims 1 to 6, wherein the first plastic component (2) features a first melting point (T₂) and the second plastic component (3) features a second melting point (T₃), wherein the first melting point (T₂) is higher than the second melting point (T₃) and between the first and the second melting point (T₂, T₃) is a difference of at least 8 K, preferably of at least 10 K and further preferably of at least 15 K.

8. Spunbonded fabric material according to one of the claims 1 to 7, wherein the mass proportion of the first plastic component is between 20 % and 80 %, preferably between 40 % and 60 %, further preferably between 45 % and 55 %.

9. Spunbonded fabric material according to one of the claims 1 to 8, wherein the first plastic component (2) and/or the second plastic component (3) features a first proportion of a first thermoplastic material (MA) having a first melting point (T_{A}) and a second proportion of a second thermoplastic material (MB) having a second melting point (T_{B}), wherein the first melting point (T_{A}) is higher than the second melting point (T_{B}).

10. Spunbonded fabric material according to claim 9, wherein the second thermoplastic material (MB) of different multicomponent fibers (1) is partially fused together to consolidate the spunbonded fabric material (10).

11. Spunbonded fabric material according to claim 9 or 10, wherein the first thermoplastic material (MA) is a polypropylene homopolymer and/or the second thermoplastic material (MB) is a metallocene polypropylene.

12. Spunbonded fabric material according to one of the claims 9 to 11, wherein the mass proportion of the first thermoplastic material (MA) is between 40 % and
60 %, preferably between 70 % and 80 %, further preferably between 85 % and 95 %.

13. Spunbonded fabric material according to one of the claims 1 to 12, wherein the spunbonded fabric material (10) features an air permeability between 1,300 l/m²s and 1,700 l/m²s, preferably between 1,400 l/m²s and 1,500 l/m²s, further preferably between 2,000 l/m²s and 2,600 l/m²s, and still further preferably between 3,500 l/m²s and 4,500 l/m²s.

14. Spunbonded fabric material according to one of the claims 1 to 13, wherein the spunbonded fabric material (1) has a machine direction (M), and the multicomponent fibers (1) are oriented along the machine direction (M), wherein the spunbonded fabric material (10) features preferably a flexural rigidity in machine direction (M) of more than 170 mN, preferably of more than 180 mN, further preferably of more than 200 mN.

15. Object comprising a spunbonded fabric material according to one of the claims 1 to 14.

16. Object according to claim 15, **characterized in that** the object is an insulating material, in particular for building insulation, motor vehicles, household appliances, beverage packaging, and/or a packaging material and/or a lightweight construction for which the spunbonded fabric material is provided as an element embedded in the flow of forces.

17. Object according to claim 16, **characterized in that** the object is a filter medium (11) which further comprises a meltblown material (9).

18. Filter element comprising a spunbonded fabric material according to at least one of the claims 1 to 14 and/or a filter medium according to claim 17.

19. Filter element according to claim 18, wherein the filter element comprises an adsorbent layer.

20. Filter element (32) according to claim 18 or 19, having a filter medium according to claim 17 which is zigzag-folded to form a pleated pack (20).

21. Filter element according to one of the claims 18 to 20, wherein the filter element (32) is a cabin air filter element for a motor vehicle (14).

22. Use of a filter medium (10) according to claim 17 or of a filter element (32) according to one of the claims 18 to 21 for filtering a gas flow loaded with particles.

23. Use of a filter medium (10) according to claim 17 in a cabin air filter for a motor vehicle (14).

## Revendications

1. Matériau filé-lié qui est formé au moins partiellement de fibres à composants multiples cercle-segmentées (1) ayant au moins un premier composant synthétique (2) et un second composant synthétique (3), dans lequel les fibres à composants multiples (1) présentent une section transversale circulaire, et dans lequel une quantité de fibres à composants multiples (1), dont les segments de cercle (2, 3) sont reliés l'un à l'autre aux limites de segment intérieures (4) des fibres à composants multiples (1) tout au long de leur étendue en longueur (L), s'élève au moins à 70 %, de préférence au moins à 80 %, et dans lequel le matériau filé-lié est solidifié thermiquement, dans lequel, avec une quantité de longueur des fibres à composants multiples (1) de 50 % au maximum, de préférence de 30 % au maximum, plus préférablement de 20 % au maximum, les segments de cercle (2, 3) des fibres à composants multiples (1) sont fractionnés les uns des autres, et dans lequel le premier composant synthétique (2) et le second composant synthétique (3) sont constitués d'un polypropylène.

2. Matériau filé-lié selon la revendication 1, dans lequel une fibre à composants multiples cercle-segmentée respective (1) a une surface circonférentielle (7), et les composants synthétiques (2, 3) sont adjacents aux surfaces circonférentielles (7) des fibres à composants multiples (1).

3. Matériau filé-lié selon la revendication 2, dans lequel la surface circonférentielle (7) présente des rainures longitudinales (6') tout au long des surfaces limites (6) entre les composants synthétiques (2, 3).

4. Matériau filé-lié selon l'une quelconque des revendications 1 à 3, dans lequel le matériau filé-lié (10) a une épaisseur (D)
- entre 1,0 mm et 2,0 mm, de préférence entre 1,2 mm et 1,8 mm, plus préférablement entre 1,3 mm et 1,7 mm, ou
- entre 0,5 mm et 1,5 mm, de préférence entre 0,7 mm et 1,3 mm, plus préférablement entre 0,8 mm et 1,2 mm.

5. Matériau filé-lié selon l'une quelconque des revendications 1 à 4, dans lequel les composants synthétiques (2, 3) des fibres à composants multiples (1) sont chargés en tant qu'électrets.

6. Matériau filé-lié selon l'une quelconque des revendications 1 à 5, dans lequel le matériau filé-lié (10) a un grammage entre 80 g/m² et 160 g/m², de préférence entre 90 g/m² et 110 g/m², entre 80 g/m² et 100 g/m², ou entre 110 g/m² et 130 g/m².

7. Matériau filé-lié selon l'une quelconque des revendications 1 à 6, dans lequel le premier composant synthétique (2) présente un premier point de fusion (T₂) et le second composant synthétique (3) présente un second point de fusion (T₃), dans lequel le premier point de fusion (T₂) est plus élevé que le second point de fusion (T₃) et entre le premier et le second point de fusion (T₂, T₃) est une différence d'au moins 8 K, de préférence d'au moins 10 K et plus préférablement d'au moins 15 K.

8. Matériau filé-lié selon l'une quelconque des revendications 1 à 7, dans lequel le pourcentage en masse du premier composant synthétique est entre 20 % et
80 %, de préférence entre 40 % et 60 %, plus préférablement entre 45 % et 55 %.

9. Matériau filé-lié selon l'une quelconque des revendications 1 à 8, dans lequel le premier composant synthétique (2) et/ou le second composant synthétique (3) présente une première quantité du premier matériau thermoplastique (MA) ayant un premier point de fusion (T_{A}) et une seconde quantité d'un second matériau thermoplastique (MB) ayant un second point de fusion (T_{B}), dans lequel le premier point de fusion (T_{A}) est plus élevé que le second point de fusion (T_{B}).

10. Matériau filé-lié selon la revendication 9, dans lequel le second matériau thermoplastique (MB) de différentes fibres à composants multiples (1) est partiellement fusionné pour consolider le matériau filé-lié (10).

11. Matériau filé-lié selon la revendication 9 ou 10, dans lequel le premier matériau thermoplastique (MA) est un homopolymère de polypropylène et/ou le second matériau thermoplastique (MB) est un polypropylène de métallocène.

12. Matériau filé-lié selon l'une quelconque des revendications 9 à 11, dans lequel le pourcentage en masse du premier matériau thermoplastique (MA) est entre 40 % et 60 %, de préférence entre 70 % et 80 %, plus préférablement entre 85 % et 95 %.

13. Matériau filé-lié selon l'une quelconque des revendications 1 à 12, dans lequel le matériau filé-lié (10) présente une perméabilité à l'air entre 1.300 l/m²s et 1.700 l/m²s, de préférence entre 1.400 l/m²s et 1.500 l/m²s, plus préférablement entre 2.000 l/m²s et 2.600 l/m²s, et encore plus préférablement entre 3.500 l/m²s et 4.500 l/m²s.

14. Matériau filé-lié selon l'une quelconque des revendications 1 à 13, dans lequel le matériau filé-lié (1) a un sens machine (M), et les fibres à composants multiples (1) sont orientées tout au long du sens machine (M), dans lequel le matériau filé-lié (10) présente de préférence une rigidité à la flexion dans le sens machine (M) supérieure à 170 mN, de préférence supérieure à 180 mN, plus préférablement supérieure à 200 mN.

15. Objet comprenant un matériau filé-lié selon l'une quelconque des revendications 1 à 14.

16. Objet selon la revendication 15, **caractérisé en ce que** l'objet est un matériau isolant, notamment pour l'isolation des bâtiments, des véhicules automobiles, des appareils ménagers, des emballages de boissons, et/ou un matériau d'emballage et/ou une construction légère pour laquelle le matériau filé-lié est prévu comme étant un élément incorporé dans le flux de force.

17. Objet selon la revendication 16, **caractérisé en ce que** l'objet est un milieu filtrant (11) qui comprend de préférence en outre un matériau de fusion-soufflage (9).

18. Élément filtrant comprenant un matériau filé-lié selon au moins l'une quelconque des revendications 1 à 14 et/ou un milieu filtrant selon la revendication 17.

19. Élément filtrant selon la revendication 18, dans lequel l'élément filtrant comprend une couche d'adsorbant.

20. Élément filtrant (32) selon la revendication 18 ou 19, ayant un milieu filtrant selon la revendication 17, plié en accordéon pour former un ensemble de plis (20).

21. Élément filtrant selon l'une quelconque des revendications 18 à 20, dans lequel l'élément filtrant (32) est un élément de filtration d'air d'espace intérieur pour un véhicule automobile (14).

22. Utilisation d'un milieu filtrant (10) selon la revendication 17 ou d'un élément filtrant (32) selon l'une quelconque des revendications 18 à 21 destiné à filtrer un flux de gaz chargé de particules.

23. Utilisation d'un milieu filtrant (10) selon la revendication 17 dans un filtre à air d'habitacle pour un véhicule automobile (14).
